# EUROPEAN PATENT SPECIFICATION

(11) **EP 4 071 570 B1**
(45) Date of publication and mention of the grant of the patent: **12.11.2025**
(21) Application number: 20895579.9
(22) Date of filing: 25.11.2020
(51) Int. Cl.: G05B 23/02, G05B 13/04, G05B 17/02

(54) **PREDICTION SYSTEM, INFORMATION PROCESSING DEVICE, AND INFORMATION PROCESSING PROGRAM**
VORHERSAGESYSTEM, INFORMATIONSVERARBEITUNGSVORRICHTUNG UND INFORMATIONSVERARBEITUNGSPROGRAMM
SYSTÈME DE PRÉDICTION, DISPOSITIF DE TRAITEMENT D'INFORMATIONS ET PROGRAMME DE TRAITEMENT D'INFORMATIONS

(30) Priority: 05.12.2019 JP 2019220426
(43) Date of publication of application: 12.10.2022
(73) Proprietor: OMRON Corporation, Shiokoji-dori, Shimogyo-Ku Kyoto-shi Kyoto 600-8530 (JP)
(72) Inventor: MIYAMOTO, Kota, Kyoto-shi, Kyoto 600-8530 (JP); KAWANOUE, Shinsuke, Kyoto-shi, Kyoto 600-8530 (JP)
(74) Representative: Mewburn Ellis LLP
(86) International application number: PCT/JP2020/043755
(87) International publication number: WO 2021/111936

(56) References cited:
- WO-A1-2016/088362
- JP-A- 2002 062 927
- JP-A- 2012 074 007
- JP-A- 2012 128 800
- JP-A- 2018 180 759
- US-A1- 2016 071 017
- US-A1- 2018 046 926
- US-A1- 2018 285 788
- US-A1- 2019 258 904

## Description

### TECHNICAL FIELD

The present invention relates to a prediction system that predicts change that occurs in an object to be controlled, an information processing apparatus included in the prediction system, and an information processing program for implementing the information processing apparatus.

### BACKGROUND ART

At various production sites, for some reasons, change different from natural change or change different from normal change may occur. If occurrence of such change could be predicted in advance and some measures could be taken, it would be beneficial for maintaining performance of a production facility or ensuring quality of products.

In connection with prediction in advance as such, for example, Japanese Patent Laying-Open No. 2009-237832 (PTL 1) discloses a method of constructing a variable prediction model capable of improving accuracy in prediction of demand for each period and each season. The method of constructing the variable prediction model disclosed in PTL 1 adopts processing for selecting an optimal training period and an optimal prediction model highest in prediction accuracy by constructing a prediction model appropriate for each of a plurality of training periods ranging from seven to seventy days using training data obtained by correcting accumulated time-series data and evaluating accuracy of modeling for each training period.

US2018/046926A1 discloses a predictive modeling method that may include determining a time interval of time-series data; identifying one or more variables of the data as targets; determining a forecast range and a skip range associated with a prediction problem represented by the data; generating training data and testing data from the time-series data; fitting a predictive model to the training data; and testing the fitted model on the testing data. The forecast range may indicate a duration of a period for which values of the targets are to be predicted. The skip range may indicate a temporal lag between the time period corresponding to the data used to make predictions and the time period corresponding to the predictions. The skip range may separate input data subsets representing model inputs from subsets representing model outputs, and separate test data subsets representing model inputs from subsets representing validation data.

US2018/285788A1 discloses a computer-implemented method of generating predicted energy consumption data for a first energy consumer based on energy consumption data of a plurality of further energy consumers. Prediction is based on a set of training samples, each training sample comprising predictor attribute data and energy consumption data for a respective one of the further energy consumers, as well as one or more predictor attribute values for the first energy consumer. A predictive model is generated based on the training samples, the predictive model defining a relationship between values of predictor attributes and energy consumption data of the training samples. Predicted energy consumption data for the first energy consumer is then determined using the predictive model and the predictor attribute values. A method of clustering energy consumption profiles is also disclosed.

### CITATION LIST

### PATENT LITERATURE

PTL 1: Japanese Patent Laying-Open No. 2009-237832

### SUMMARY OF INVENTION

### TECHNICAL PROBLEM

In the method of constructing the variable prediction model disclosed in PTL 1 described above, however, a prediction model appropriate for each of the plurality of training periods should be constructed and then accuracy in modeling for each training period should be evaluated. The method is disadvantageous in large number of man-hours required for selection of an optimal training period and an optimal prediction model.

The present invention provides an approach to more efficient generation of a prediction model.

### SOLUTION TO PROBLEM

A prediction system according to one example of the present invention is as specified in claim 1.

According to this configuration, the prediction model for which the plurality of indicators have been evaluated can readily been generated.

The prediction model generator may further include means that selects a sample to be used as the training sample from among a plurality of samples by clustering using one or more feature values calculated from each sample. According to this configuration, a large number of samples similar to one another can be prevented from being selected as training samples.

The prediction model generator may calculate importance of each status value by applying a decision tree algorithm to the training sample and a plurality of associated status values. According to this configuration, by applying the decision tree algorithm, which status value is suitable for the prediction model can readily be determined.

The prediction model generator may evaluate performance of prediction models generated in patterns different in at least one of a length and a position of an interval included in the search interval. According to this configuration, a suitable interval included in the search interval can readily be found.

The prediction model generator may fix a model parameter of the prediction model and then search for an interval to be used for prediction. According to this configuration, by once fixing the model parameter of the prediction model, throughput involved with search can be reduced.

The prediction model generator may further include means that provides a first user interface that accepts an operation by a user for changing an interval to be used for prediction. According to this configuration, the user can finely adjust the determined interval while checking.

The plurality of indicators comprise at least one of prediction accuracy, a model size, and a processing speed. According to this configuration, an element on which importance is to be placed during operation is included in the indicator, so that the optimal prediction model can be generated in consideration of operation.

The prediction model generator may further include means that provides a second user interface that shows the plurality of indicators. According to this configuration, a user can know the plurality of determined indicators at a glance.

According to another example of the present invention, an information processing apparatus connected to a control device is as specified in claim 8.

According to yet another example of the present invention, an information processing program executed by a computer connected to a control device is as specified in claim 9.

### ADVANTAGEOUS EFFECTS OF INVENTION

According to the present invention, a prediction model can more efficiently be generated.

### BRIEF DESCRIPTION OF DRAWINGS

Fig. 1 is a schematic diagram showing an exemplary overall configuration of a prediction system according to the present embodiment.
Fig. 2 is a schematic diagram showing an exemplary application of the prediction system according to the present embodiment.
Fig. 3 is a schematic diagram showing exemplary control based on a result of prediction by the prediction system according to the present embodiment.
Fig. 4 is a flowchart showing a processing procedure in processing for generating a prediction model with the use of the prediction system according to the present embodiment.
Fig. 5 is a block diagram showing an exemplary hardware configuration of a control device included in the prediction system according to the present embodiment.
Fig. 6 is a block diagram showing an exemplary hardware configuration of a support apparatus included in the prediction system according to the present embodiment.
Fig. 7 is a block diagram showing an exemplary software configuration of the control device and the support apparatus included in the prediction system according to the present embodiment.
Fig. 8 is a block diagram showing overview of a functional module included in an analysis program shown in Fig. 7.
Fig. 9 is a diagram for illustrating exemplary selection of a training sample in the prediction system according to the present embodiment.
Fig. 10 is a flowchart showing a more detailed processing procedure involved with selection of a training sample (step S3) in the processing procedure in generation processing shown in Fig. 4.
Fig. 11 is a diagram showing exemplary clustering involved with selection of a training sample in the processing procedure in the generation processing shown in Fig. 4.
Fig. 12 is a diagram showing an exemplary user interface provided in processing for selecting a training sample in the prediction system according to the embodiment.
Fig. 13 is a diagram showing another exemplary user interface provided in processing for selecting a training sample in the prediction system according to the embodiment.
Fig. 14 is a flowchart showing a more detailed processing procedure involved with determination of an explanatory variable and an interval (step S4) in the processing procedure in the generation processing shown in Fig. 4.
Fig. 15 is a schematic diagram for outlining processing contents in determination of an explanatory variable and an interval (step S4) in the processing procedure in the generation processing shown in Fig. 4.
Fig. 16 is a diagram showing an exemplary user interface provided in processing for determining an explanatory variable and an interval in the prediction system according to the embodiment.
Fig. 17 is a diagram showing an exemplary user interface provided in processing for determining an explanatory variable and an interval in the prediction system according to the embodiment.
Fig. 18 is a diagram showing an exemplary user interface provided in processing for determining an explanatory variable and an interval in the prediction system according to the embodiment.
Fig. 19 is a diagram showing an exemplary user interface provided in processing for determining an explanatory variable and an interval in the prediction system according to the embodiment.
Fig. 20 is a flowchart showing a more detailed processing procedure involved with determination of a model parameter (step S5) shown in Fig. 4.
Fig. 21 is a diagram showing an exemplary user interface provided in processing for determining a model parameter in a prediction system 1 according to the embodiment.
Fig. 22 is a schematic diagram showing an overall configuration of an abnormality sensing system according to a modification of the present embodiment.
Fig. 23 is a diagram for illustrating exemplary processing for sample selection shown in Fig. 22.

### DESCRIPTION OF EMBODIMENTS

An embodiment of the present invention will be described in detail with reference to the drawings. The same or corresponding elements in the drawings have the same reference characters allotted and description thereof will not be repeated.

### <A. Application Example>

An exemplary scene to which the present invention is applied will initially be described.

A primary aspect of a control system with a prediction function according to the present embodiment will be described. Since description is given below with a prediction function of the control system being mainly focused on, the entire control system is also referred to as a "prediction system."

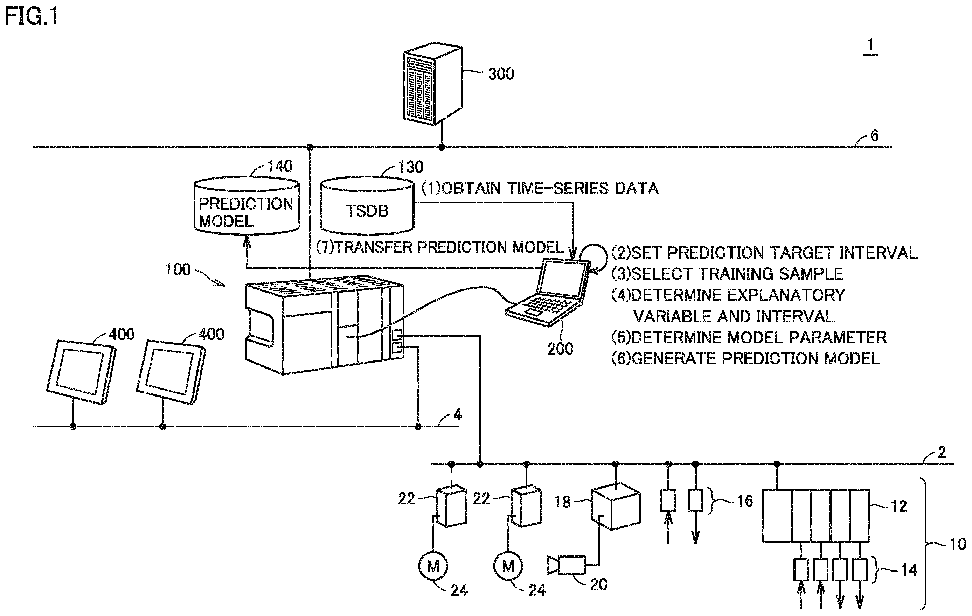

Fig. 1 is a schematic diagram showing an exemplary overall configuration of a prediction system 1 according to the present embodiment. Referring to Fig. 1, prediction system 1 according to the present embodiment includes, as its main constituent elements, a control device 100 that controls an object to be controlled and a support apparatus 200 connected to control device 100.

Control device 100 may be implemented by a kind of a computer such as a programmable controller (PLC). Control device 100 is connected to a field apparatus group 10 over a field bus 2 and connected to one or more display apparatuses 400 over a field bus 4. Control device 100 may further be connected to a higher-order server 300 over a higher-order network 6. Higher-order server 300 and display apparatus 400 are optional features and they are not features essential for prediction system 1.

Control device 100 includes a control logic (which is also referred to as a "PLC engine" below) that performs various types of operations for controlling facilities or machines. In addition to the PLC engine, control device 100 performs a collection function to collect data (which is also referred to as "input data" below) measured in field apparatus group 10 and transferred to control device 100. Furthermore, control device 100 also performs a prediction function to predict change over time in the future based on collected input data.

Specifically, a time-series database (which is also denoted as "TSDB" below) 130 implemented in control device 100 provides a collection function, and a prediction model 140 implemented in control device 100 provides a monitoring function. Details of TSDB 130 and prediction model 140 will be described later.

Preferably, an industrial communication protocol is adopted for field bus 2 and field bus 4. EtherCAT^{®}, EtherNet/IP^{™}, DeviceNet^{™}, and CompoNet^{™} have been known as such a communication protocol.

Field apparatus group 10 includes an apparatus that collects input data from an object to be controlled or a manufacturing apparatus or a production line (which will also collectively be referred to as a "field" below) relating to control. An input relay and various sensors are assumed as such an apparatus that collects input data. Field apparatus group 10 further includes an apparatus that performs some actions onto a field based on an instruction (which is also referred to as "output data" below) generated by control device 100. An output relay, a contactor, a servo driver and a servo motor, and any other actuators are assumed as an apparatus that performs some actions onto such a field. Field apparatus group 10 exchanges data including input data and output data with control device 100 over field bus 2.

In an exemplary configuration shown in Fig. 1, field apparatus group 10 includes a remote input/output (I/O) apparatus 12, a relay group 14, an image sensor 18 and a camera 20, and a servo driver 22 and a servo motor 24.

Remote I/O apparatus 12 includes a communication unit that establishes communication over field bus 2 and an input and output unit (which is also referred to as an "I/O unit" below) for collecting input data and providing output data. Input data and output data are exchanged between control device 100 and the field with such an I/O unit being interposed. Fig. 1 shows an example in which a digital signal is exchanged as input data and output data with relay group 14 being interposed.

The I/O unit may directly be connected to the field bus. Fig. 1 shows an example in which an I/O unit 16 is directly connected to field bus 2.

Image sensor 18 performs image measurement processing such as pattern matching onto data of images picked up by camera 20 and transmits a result of processing to control device 100.

Servo driver 22 drives servo motor 24 in accordance with output data (for example, a position instruction) from control device 100.

As described above, data is exchanged between control device 100 and field apparatus group 10 over field bus 2. Such exchanged data is updated in very short cycles of the order of several hundred microseconds to several ten milliseconds. Processing for updating such exchanged data may also be referred to as "I/O refresh processing."

Upon receiving an operation from a user, display apparatus 400 connected to control device 100 over field bus 4 transmits a command in accordance with the operation by the user to control device 100 and graphically shows a result of operation in control device 100.

Higher-order server 300 is connected to control device 100 over higher-order network 6 and exchanges necessary data with control device 100. A general-purpose protocol such as Ethernet^{™} is implemented in higher-order network 6.

Support apparatus 200 is an information processing apparatus (an exemplary computer) that supports preparation necessary for control device 100 to control an object to be controlled. Specifically, support apparatus 200 provides an environment (a program creation and edition tool, a parser, or a compiler) for developing a user program to be executed in control device 100, a setting environment for setting a parameter (configuration) for control device 100 and various devices connected to control device 100, a function to transmit a generated user program to control device 100, and a function to modify and change on-line, the user program executed on control device 100.

Furthermore, support apparatus 200 according to the present embodiment performs a function to support generation and optimization of prediction model 140 implemented in control device 100. In other words, support apparatus 200 includes a prediction model generator that determines prediction model 140 in advance. Details of such a function will be described later.

An exemplary application of control device 100 included in prediction system 1 will now be described.

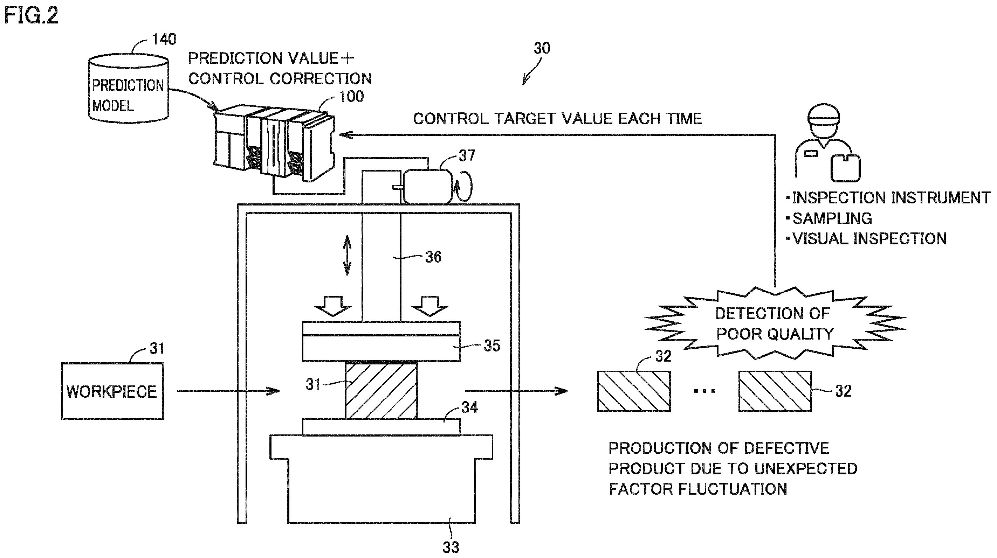

Fig. 2 is a schematic diagram showing an exemplary application of prediction system 1 according to the present embodiment. Fig. 2 shows an exemplary production facility including a pressing machine 30.

Referring to Fig. 2, pressing machine 30 accepts a workpiece 31 and arranges accepted workpiece 31 on a support base 34 provided on a base 33. Then, workpiece 31 is compressed by a pressing plate 35 provided at a tip end of a driveshaft 36 driven by a motor 37 to produce an intermediate product 32.

It is assumed that a defect can occur in intermediate product 32 due to unexpected factor fluctuation in pressing machine 30. Therefore, whether or not a defect has occurred in intermediate product 32 is determined by inspection with an inspection instrument arranged downstream from pressing machine 30 or visual inspection by an inspector or inspection by sampling. When it is determined that the defect has occurred, a target value or the like is adjusted each time.

Thus, in a normal manufacturing process, in order to maintain or improve a ratio of non-defective intermediate products 32, the target value should be adjusted each time. It is difficult, however, to address all factor fluctuations in spite of design in advance from various points of view.

In contrast, by predicting a state of intermediate product 32 (that is, quality after working) based on prediction model 140 according to the present embodiment, control by control device 100 can be corrected before the defect actually occurs. By making use of such prediction of occurrence of a defect in advance, the number of man-hours involved with adjustment of the target value or the like each time can be reduced, and occurrence of a defect in intermediate product 32 can be prevented.

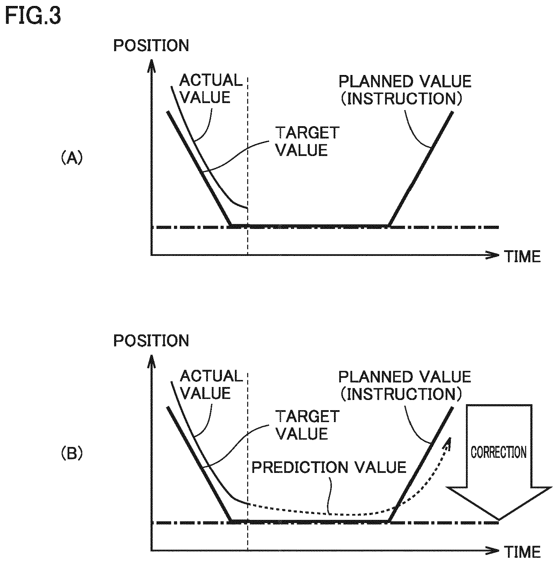

Fig. 3 is a schematic diagram showing exemplary control based on a result of prediction by prediction system 1 according to the present embodiment.

Fig. 3 (A) shows a planned value (an instruction) of a position of pressing by the pressing machine at a certain time point and an actual position (an actual value) of pressing by pressing machine 30. The target value represents an intended thickness of worked intermediate product 32.

Referring to Fig. 3 (B), at a certain time point, a future position (a prediction value) of pressing by pressing machine 30 may be calculated based on information until that time point (which may include the actual value), and an amount of control for pressing machine 30 may be corrected based on the calculated prediction value.

In pressing machine 30 shown in Figs. 2 and 3, by predicting the position of pressing by pressing machine 30 and correcting the amount of control based on the result of prediction, an operator does not have to adjust the target value each time, for example, depending on variation in hardness of workpiece 31. Consequently, production of a defective product due to unexpected factor fluctuation can be suppressed and quality can be stabilized in spite of some variation in workpiece 31.

Data (an actual value or an observation value) to be used for prediction and predicted data may be identical to each other in part or in the entirety, or may completely be different from each other.

Prediction system 1 according to the present embodiment provides a function to appropriately generate prediction model 140. The function to appropriately generate prediction model 140 may typically be implemented in support apparatus 200.

### <B. Overview of Generation and Operation of Prediction Model>

Overview of generation and operation of prediction model 140 with the use of prediction system 1 according to the present embodiment will now be described.

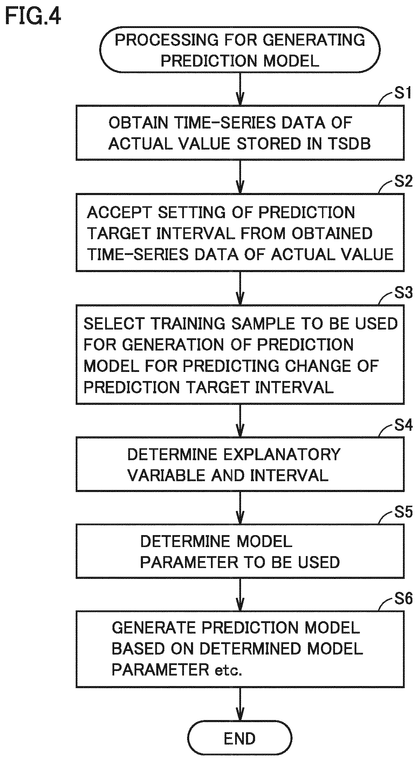

Fig. 4 is a flowchart showing a processing procedure in processing for generating prediction model 140 with the use of prediction system 1 according to the present embodiment. Each step shown in Fig. 4 is typically performed by execution of a program (an analysis program 226, an OS 228, and the like) by a processor 202 of support apparatus 200.

Referring to Fig. 4, support apparatus 200 obtains time-series data of an actual value stored in TSDB 130 (step S1). In succession, support apparatus 200 accepts setting of a prediction target interval from the obtained time-series data of the actual value (step S2).

Support apparatus 200 selects a training sample to be used for generation of a prediction model for predicting change of the prediction target interval set in step S2 (step S3). In step S3, which data among a plurality of types of data is to be used for training is selected. More specifically, support apparatus 200 determines a class by clustering of a statistic (a feature value) of each piece of time-series data (waveform sample) and extracts data of interest from the determined class. Processing in step S3 will be described in detail.

In succession, support apparatus 200 determines an explanatory variable and an interval (step S4). Then, support apparatus 200 determines a model parameter to be used (step S5). In step S5, support apparatus 200 generates prediction model 140 in accordance with the explanatory variable and the interval selected in step S4 and searches for an appropriate prediction algorithm by evaluating performance of generated prediction model 140. Support apparatus 200 determines the prediction algorithm high in performance such as prediction accuracy and a prediction speed as the model parameter to be used.

Finally, support apparatus 200 generates prediction model 140 based on the determined model parameter and the like (step S6).

Prediction model 140 generated through the processing procedure as above is set in control device 100, so that operations as shown in Figs. 2 and 3 can be performed.

### <C. Exemplary Hardware Configuration>

An exemplary hardware configuration of a main apparatus included in prediction system 1 according to the present embodiment will now be described.

### (c1: Exemplary Hardware Configuration of Control Device 100)

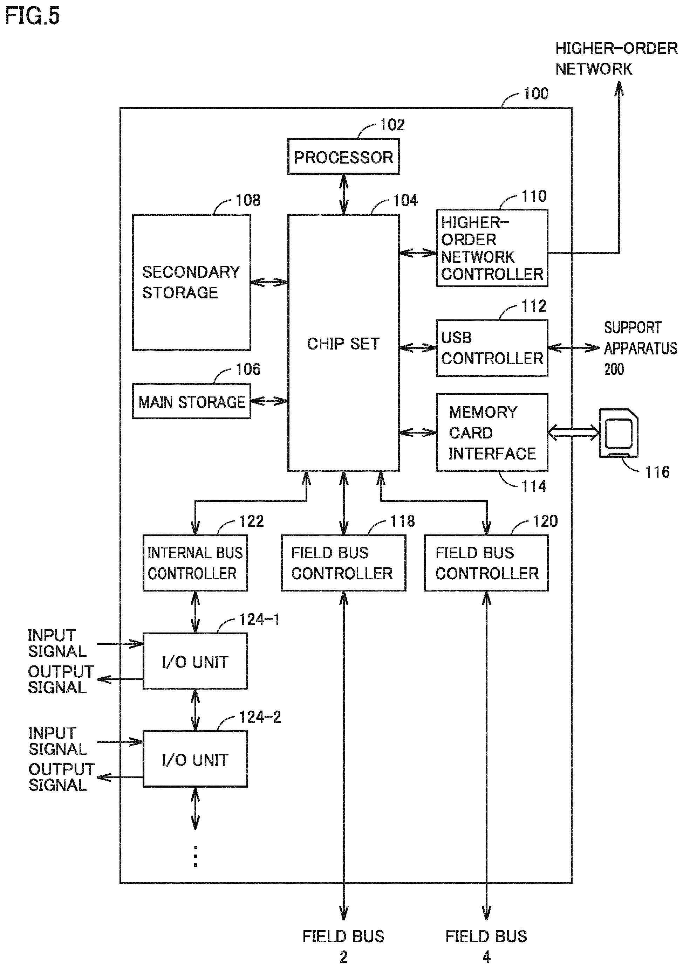

Fig. 5 is a block diagram showing an exemplary hardware configuration of control device 100 included in prediction system 1 according to the present embodiment. Referring to Fig. 5, control device 100 includes a processor 102 such as a central processing unit (CPU) or a micro-processing unit (MPU), a chip set 104, a main storage 106, a secondary storage 108, a higher-order network controller 110, a universal serial bus (USB) controller 112, a memory card interface 114, an internal bus controller 122, field bus controllers 118 and 120, and I/O units 124-1, 124-2, ...

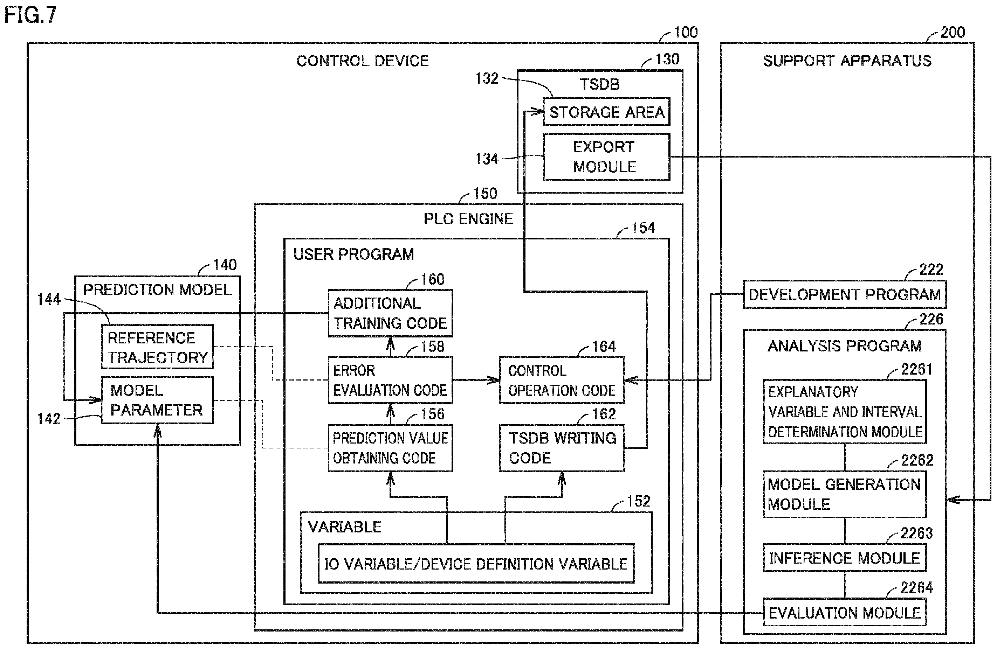

Processor 102 reads various programs stored in secondary storage 108, develops the programs on main storage 106, and executes the programs, to thereby implement a PLC engine 150 (see Fig. 7) and prediction model 140. Chip set 104 controls data transmission or the like between processor 102 and each component.

In addition to a system program for implementing PLC engine 150, a user program executed by using PLC engine 150 is stored in secondary storage 108. A program for implementing prediction model 140 is further also stored in secondary storage 108.

Higher-order network controller 110 controls exchange of data with another apparatus over higher-order network 6. USB controller 112 controls exchange of data with support apparatus 200 through USB connection.

Memory card interface 114 is constructed such that a memory card 116 can be attached thereto and detached therefrom, and allows writing of data into memory card 116 and reading of various types of data (the user program or trace data) from memory card 116.

Internal bus controller 122 is an interface for exchange of data with I/O units 124-1, 124-2, ... mounted on control device 100.

Field bus controller 118 controls exchange of data with another apparatus over field bus 2. Similarly, field bus controller 120 controls exchange of data with another apparatus over field bus 4.

Though Fig. 5 shows an exemplary configuration in which a necessary function is provided by execution of a program by processor 102, a part or the entirety of these provided functions may be performed by using dedicated hardware circuitry (for example, an application specific integrated circuit (ASIC) or a field-programmable gate array (FPGA)). Alternatively, a principal part of control device 100 may be implemented by hardware (for example, an industrial personal computer based on a general-purpose personal computer) in accordance with a general-purpose architecture. In this case, using virtualization technology, a plurality of operating systems (OSs) different in application are executed in parallel and a necessary application may be executed on each OS.

### (c2: Exemplary Hardware Configuration of Support Apparatus 200)

Support apparatus 200 according to the present embodiment is implemented by execution of a program with the use of hardware (for example, a general-purpose personal computer) in accordance with a general-purpose architecture by way of example.

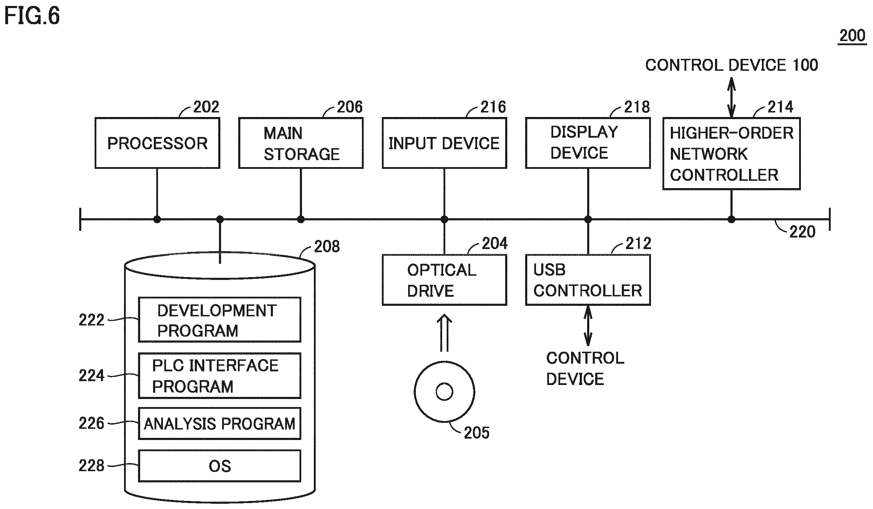

Fig. 6 is a block diagram showing an exemplary hardware configuration of support apparatus 200 included in prediction system 1 according to the present embodiment. Referring to Fig. 6, support apparatus 200 includes processor 202 such as a CPU or an MPU, an optical drive 204, a main storage 206, a secondary storage 208, a USB controller 212, a higher-order network controller 214, an input device 216, and a display device 218. These components are connected to one another through a bus 220.

Processor 202 performs various types of processing including model generation processing as will be described later by reading various programs stored in secondary storage 208, developing the programs on main storage 206, and executing the programs.

Secondary storage 208 is implemented, for example, by a hard disk drive (HDD) or a flash solid state drive (SSD). In secondary storage 208, typically, a development program 222 for creation of a user program to be executed in support apparatus 200, debugging of the created user program, definition of a system configuration, and setting of various parameters, a PLC interface program 224 for exchange of data on the prediction function with control device 100, an analysis program 226 for implementing generation or the like of prediction model 140, and OS 228 are stored. A necessary program other than the program shown in Fig. 6 may be stored in secondary storage 208.

Support apparatus 200 includes optical drive 204. A program stored in a recording medium 205 in which a computer readable program is stored in a non-transitory manner (for example, an optical recording medium such as a digital versatile disc (DVD)) is read from the recording medium and installed in secondary storage 208 or the like.

Though various programs to be executed in support apparatus 200 may be installed from computer readable recording medium 205, it may be installed as being downloaded from any server over a network. A function provided by support apparatus 200 according to the present embodiment may be performed by using a part of a module provided by the OS.

USB controller 212 controls exchange of data with control device 100 through USB connection. Higher-order network controller 214 controls exchange of data with another apparatus over any network.

Input device 216 is constituted of a keyboard, a mouse, and the like, and accepts an operation by a user. Display device 218 is constituted of a display, various indicators, a printer, and the like, and provides output of a result of processing from processor 202.

Though Fig. 6 shows an exemplary configuration in which a necessary function is provided by execution of a program by processor 202, a part or the entirety of these provided functions may be performed by using dedicated hardware circuitry (for example, an ASIC or an FPGA).

### <D. Exemplary Software Configuration/Exemplary Functional Configuration>

An exemplary software configuration and an exemplary functional configuration of control device 100 and support apparatus 200 included in prediction system 1 according to the present embodiment will now be described.

Fig. 7 is a block diagram showing an exemplary software configuration of control device 100 and support apparatus 200 included in prediction system 1 according to the present embodiment.

Referring to Fig. 7, control device 100 includes as its principal functional configuration, TSDB 130 and prediction model 140 in addition to PLC engine 150.

PLC engine 150 sequentially interprets a user program 154 and performs designated control operation. PLC engine 150 manages a status value collected from the field in a form of a variable 152, and variable 152 is updated in predetermined cycles. PLC engine 150 may be implemented by execution of a system program by processor 102 of control device 100.

The "status value" herein encompasses an input value collected from the field, an instruction value provided to the field, and a system status value or an internal value managed within control device 100. Since the "status value" is referred to in the form of the "variable" in control device 100 according to the present embodiment, the term "variable" is used in a sense encompassing the "status value" for the sake of convenience in the description below. The technical scope of the present invention, however, is not limited to the configuration in which the "status value" is referred to in the form of the "variable".

User program 154 includes a prediction value obtaining code 156, an error evaluation code 158, an additional training code 160, a TSDB writing code 162, and a control operation code 164.

Prediction value obtaining code 156 implements a prediction value obtaining unit that obtains a prediction value by entering an actual value composed of one or more status values among status values that can be referred to by control operation code 164 into prediction model 140. More specifically, prediction value obtaining code 156 includes an instruction to obtain a prediction value by obtaining a necessary actual value managed as variable 152 and entering the actual value into prediction model 140.

Error evaluation code 158 includes an instruction to evaluate an error between the prediction value obtained by prediction value obtaining code 156 and a target value.

Additional training code 160 includes an instruction to additionally train prediction model 140 as necessary in accordance with the error evaluated by error evaluation code 158. Additional training code 160 updates a model parameter 142 that defines prediction model 140.

TSDB writing code 162 obtains a predetermined variable among variables managed as variables 152 and writes the variable into a storage area 132 in TSDB 130.

Control operation code 164 implements the control operation unit that performs operation for controlling an object to be controlled. More specifically, control operation code 164 performs operation for controlling the object to be controlled and corrects the target value to be used for operation as necessary in accordance with the error evaluated by error evaluation code 158.

TSDB 130 includes an export module 134 that exports data written in storage area 132 to support apparatus 200 or the like as necessary.

Prediction model 140 includes a reference trajectory 144 in addition to model parameter 142 that defines prediction model 140.

Development program 222 and analysis program 226 are installed in support apparatus 200.

Development program 222 generates user program 154 in accordance with an operation by a user and transfers the user program to control device 100. Development program 222 performs also a function to modify as appropriate contents in control operation code 164.

Analysis program 226 corresponds to an information processing program for implementing the prediction model generator that determines prediction model 140 in advance. More specifically, analysis program 226 supports generation of prediction model 140 and includes an explanatory variable and interval determination module 2261, a model generation module 2262, an inference module 2263, and an evaluation module 2264.

Explanatory variable and interval determination module 2261 performs a function necessary for processing for determining an explanatory variable and an interval (see step S4 shown in Fig. 4).

Model generation module 2262 performs a function necessary for processing for generating prediction model 140 (see step S6 shown in Fig. 4).

Inference module 2263 makes an inference (prediction) with the use of generated prediction model 140 and provides a result of prediction to evaluation module 2264. Evaluation module 2264 evaluates performance of prediction model 140 of interest based on the result of prediction from inference module 2263. With the functions provided by inference module 2263 and evaluation module 2264, processing for determining a model parameter to be used (see step S5 shown in Fig. 4) is performed.

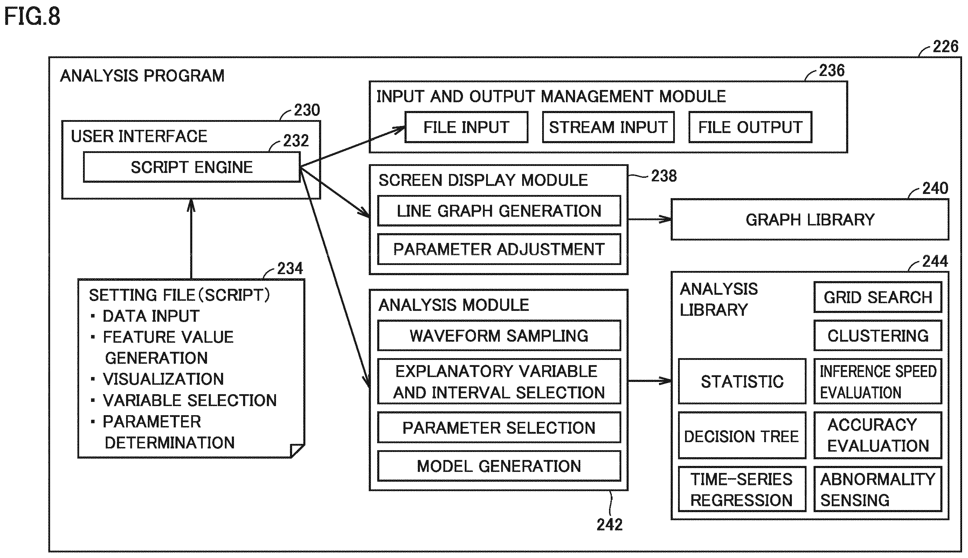

Fig. 8 is a block diagram showing overview of a functional module included in analysis program 226 shown in Fig. 7. Referring to Fig. 8, analysis program 226 of support apparatus 200 includes as its principal functional configuration, a user interface 230, an input and output management module 236, a screen display module 238, a graph library 240, an analysis module 242, and an analysis library 244.

User interface 230 accepts setting from a user and performs comprehensive processing for providing various types of information to the user. A specific form of implementation is such that user interface 230 includes a script engine 232 and performs set processing by reading a setting file 234 including scripts describing necessary processing.

Input and output management module 236 includes a file input function to read data from a designated file or the like, a stream input function to receive a data stream, and a file output function to provide output of a file including generated data or the like.

Screen display module 238 includes a line graph generation function to generate a line graph based on input data or the like and a parameter adjustment function to change various parameters upon receiving an operation by a user. With change of a parameter, the line graph generation function may update the line. The line graph generation function and the parameter adjustment function perform necessary processing by referring to graph library 240.

Analysis module 242 is a module that performs principal processing of analysis program 226, and includes a waveform sampling function, an explanatory variable and interval selection function, a parameter selection function, and a model generation function. Each function included in analysis module 242 is performed by referring to analysis library 244.

Analysis library 244 includes a library for each function included in analysis module 242 to perform processing. More specifically, analysis library 244 may perform a statistic function, a decision tree function, a time-series regression function, a grid search function, a clustering function, an inference speed evaluation function, an accuracy evaluation function, and an abnormality sensing function.

Principal processing for generating prediction model 140 shown in Fig. 4 will be described below.

### <E. Obtaining Time-Series Data of Actual Value (Step S1) and Determining Prediction Target Interval (Step S2)>

In step S1 shown in Fig. 4, support apparatus 200 obtains time-series data of an actual value stored in TSDB 130 of control device 100 in accordance with an operation by a user. The user sets a prediction target interval while the user looks at the time-series data of the actual value shown on support apparatus 200.

The prediction target interval may be set as appropriate in accordance with characteristics of an object to be controlled as shown in Figs. 2 and 3 described above.

### <F. Selecting Training Sample to Be Used for Generation of Prediction Model (Step S3)>

In step S3 shown in Fig. 4, support apparatus 200 selects a training sample to be used for generation of prediction model 140.

The "sample" herein means a data string having a prescribed time length and to be used as training data for a prediction value to be provided from prediction model 140. Basically, time-series data (raw data) of a prediction target is used as the "sample". When the prediction target is a feature value extracted from time-series data, however, the feature value may be employed. The term "sample" is used with attention being paid to a unit of processing in processing a plurality of pieces of data, and contents of data included therein are not particularly limited.

Data referred to for calculating or determining any prediction value is herein also referred to as an "explanatory variable." Any prediction value is calculated or determined with the use of one or more "explanatory variables." Therefore, a training sample is associated with data that may be a candidate for the "explanatory variable" with some method.

The "feature value" herein is a term that encompasses information included in time-series data to be processed, and it may include, for example, a maximum value, a minimum value, a median value, an average value, a standard deviation, a variance, and the like of time-series data of interest. The "feature value" may encompass also time-series data of interest itself.

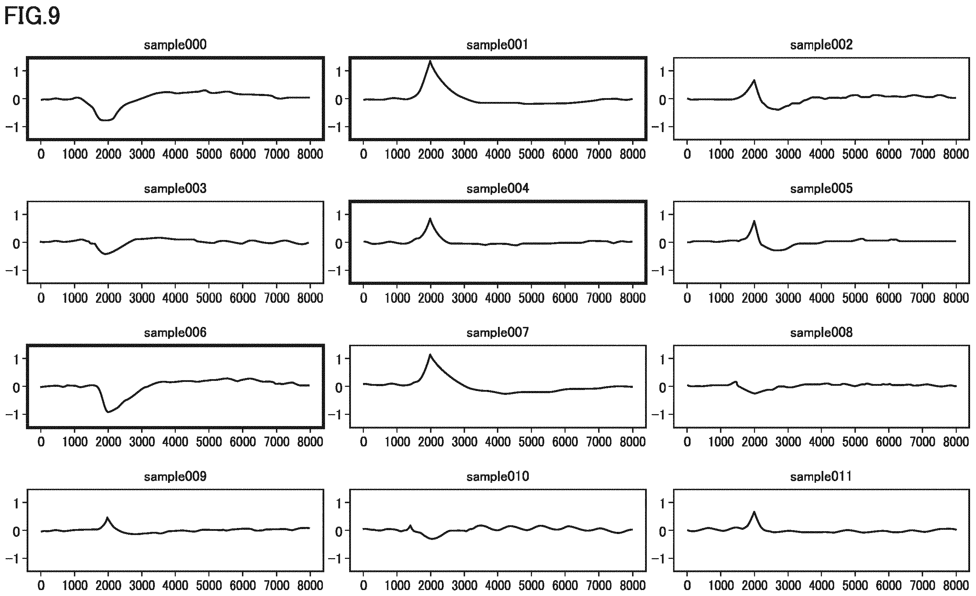

Fig. 9 is a diagram for illustrating exemplary selection of a training sample in prediction system 1 according to the present embodiment. Fig. 9 shows exemplary time-series data (sample) having a prescribed time length in correspondence with a prediction target interval.

Among these samples, as samples various in pattern of variation are used more for training, prediction accuracy of prediction model 140 can be higher. In other words, training with samples exhibiting similar patterns of variation does not contribute to improvement in prediction accuracy of prediction model 140.

In the example shown in Fig. 9, four samples surrounded with a bold frame are selected as training samples different in pattern of variation from one another.

In an exemplary method of selecting samples different in pattern of variation from one another, one or more feature values (for example, an average value and/or a standard deviation) are calculated from each sample and samples are subjected to clustering based on the calculated one or more feature values. By such clustering, one or more classes included in a sample group of interest are extracted. Then, one or more samples belonging to each extracted class are selected as training sample(s).

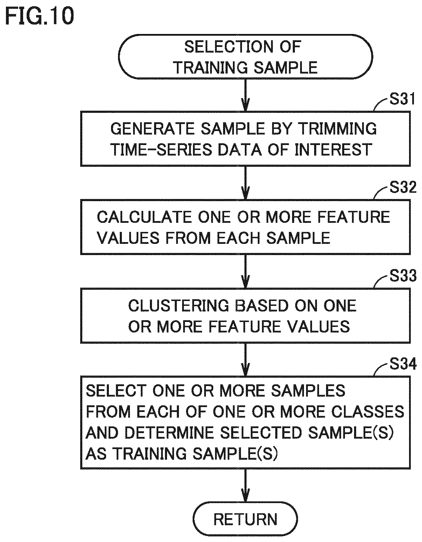

Fig. 10 is a flowchart showing a more detailed processing procedure involved with selection of a training sample (step S3) in the processing procedure in generation processing shown in Fig. 4.

Referring to Fig. 10, support apparatus 200 generates a sample by trimming time-series data of interest (step S31). The time-series data is trimmed by extracting only a part relating to the prediction target interval.

In succession, support apparatus 200 calculates one or more feature values from each sample (step S32) and carries out clustering based on the one or more calculated feature values (step S33).

Support apparatus 200 selects one or more samples from each of one or more classes determined by clustering and determines the selected sample(s) as the training sample(s) (step S34).

Support apparatus 200 thus performs as the function involved with generation of prediction model 140, processing for selecting a sample to be used as the training sample from among a plurality of samples by clustering using one or more feature values calculated from each sample.

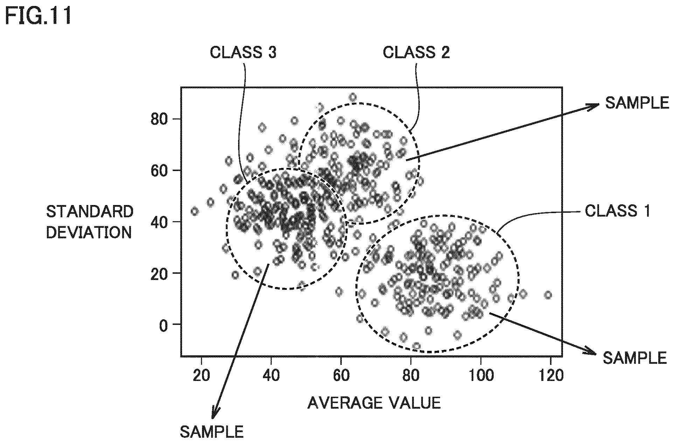

Fig. 11 is a diagram showing exemplary clustering involved with selection of a training sample in the processing procedure in the generation processing shown in Fig. 4. Fig. 11 shows an example in which two feature values (an average value and a standard deviation) are calculated from each sample and each sample is plotted in a two-dimensional space where each feature value is expressed in a coordinate.

It can be seen that a sample group shown in Fig. 11 includes three clusters (classes 1 to 3) with attention being paid to the feature values which are the average value and the standard deviation. One or more samples belonging to each extracted class are selected. Specifically, one or more samples belonging to class 1 are extracted, one or more samples belonging to class 2 are extracted, and one or more samples belonging to class 3 are extracted. A plurality of samples different in class from one another are thus determined as the training samples.

A sample of interest of the training sample may automatically be selected by support apparatus 200, or a user may support the processing or check a result of selection. For example, the user may check a result of selection of a sample and may manually make selection again.

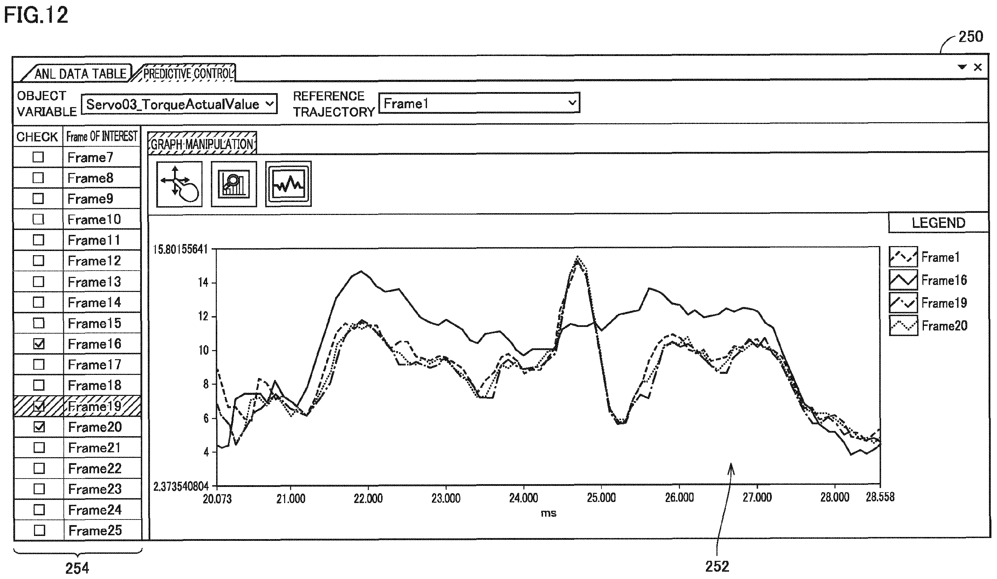

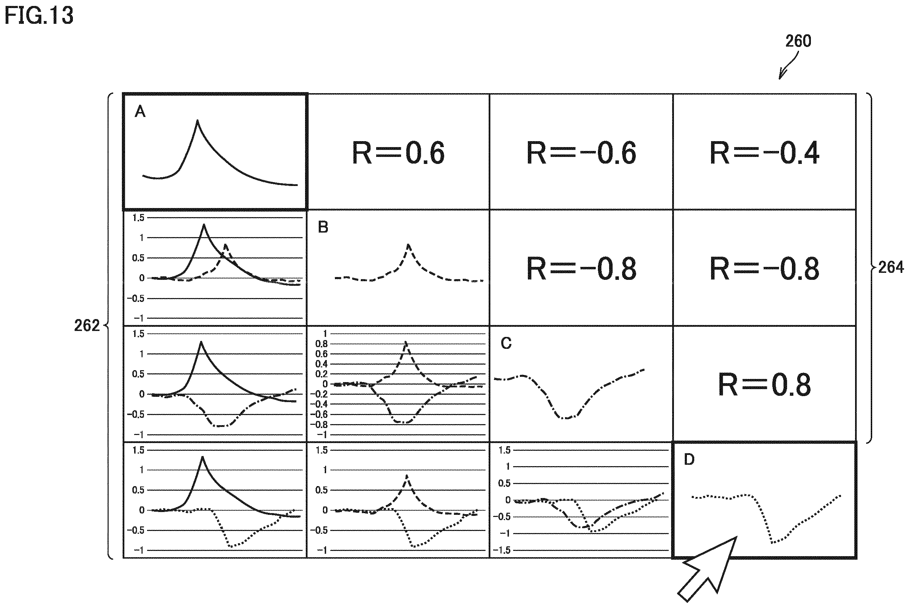

Fig. 12 is a diagram showing an exemplary user interface provided in processing for selecting a training sample in prediction system 1 according to the embodiment. Fig. 13 is a diagram showing another exemplary user interface provided in processing for selecting a training sample in prediction system 1 according to the embodiment. Figs. 12 and 13 each show exemplary representation of a result of selection of a sample.

A user interface screen 250 shown in Fig. 12 can show a synthesized waveform 252 shown by superimposing checked samples in a selected sample group 254 on one another on an identical time axis. A user can readily check suitability of selection of a sample by selecting any samples from sample group 254 and showing them as synthesized waveform 252.

A user interface screen 260 shown in Fig. 13 shows similarity among selected samples in a form of rows and columns. User interface screen 260 includes representation elements arranged in rows and columns, and waveforms of samples are arranged on a single diagonal. A similarity 264 (correlation coefficient) among samples is shown above the diagonal, and a synthesized waveform 262 shown by superimposing two corresponding samples on each other on the identical time axis is shown below the diagonal.

The user interface screens shown in Figs. 12 and 13 may be shown on the same screen. In this case, when the user selects any sample in user interface screen 250, a corresponding sample in user interface screen 260 shown in Fig. 13 may be highlighted in correspondence with the selected sample. Furthermore, alternate switching between a selected object and a non-selected object may be made by selecting any waveform in user interface screen 250.

Through processing as above, a training sample to be used for generation of a prediction model is selected.

### <G. Determining Explanatory Variable and Interval (step S4)>

In step S4 shown in Fig. 4, support apparatus 200 determines an explanatory variable and an interval involved with prediction model 140.

In step S4, a prediction algorithm adopted for prediction model 140 is fixed to a default value or the like. Then, prediction model 140 is generated for each of combinations varied in explanatory variable and interval, and the explanatory variable and the interval to be used are determined by evaluating performance. In other words, support apparatus 200 fixes a model parameter for prediction model 140, and then searches for an explanatory variable and an interval to be used for prediction.

For determining a search interval in determining the explanatory variable and the interval to be used, a control cycle set in the user program executed in control device 100 may be referred to and a preferred search interval may be determined based on the set control cycle.

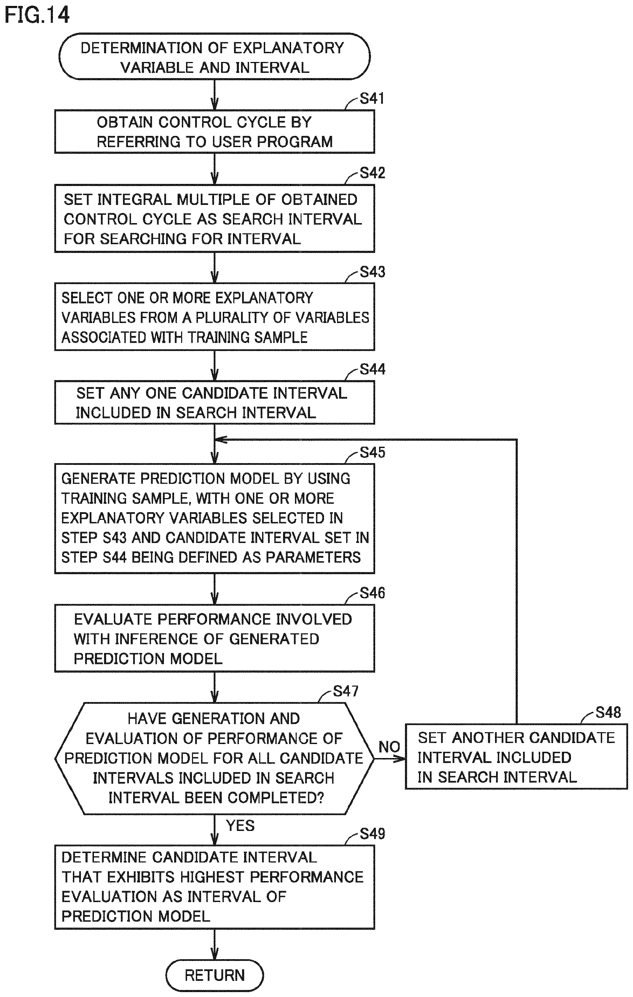

Fig. 14 is a flowchart showing a more detailed processing procedure involved with determination of an explanatory variable and an interval (step S4) in the processing procedure in the generation processing shown in Fig. 4. Referring to Fig. 14, support apparatus 200 obtains the control cycle by referring to the user program executed in control device 100 of interest (step S41). While support apparatus 200 is connected to control device 100, necessary information may be obtained by accessing control device 100, and while support apparatus 200 is not connected to control device 100, the control cycle may be obtained by referring to a project or the like held in support apparatus 200.

Support apparatus 200 sets an integral multiple of the obtained control cycle as the search interval for searching for the interval (step S42).

Support apparatus 200 selects one or more explanatory variables from a plurality of variables associated with a training sample selected in advance (see step S3 described above) (step S43). More specifically, support apparatus 200 calculates importance of each variable by applying a decision tree algorithm to the training sample and the plurality of associated variables. Then, support apparatus 200 selects a variable high in importance as the explanatory variable.

Any known algorithm can be adopted as the decision tree algorithm, and for example, random forest or the like may be employed.

Support apparatus 200 thus performs as the function involved with generation of prediction model 140, processing for determining as the explanatory variable, one or more variables (status values) among a plurality of variables (status values) associated with the training sample to be used for generation of prediction model 140, based on the importance with respect to the training sample.

Support apparatus 200 sets any one candidate interval included in the search interval (step S44). The candidate interval is generated by varying a length and/or a position of the interval included in the search interval. Then, support apparatus 200 generates prediction model 140 with the use of the training sample, with one or more explanatory variables selected in step S43 and the candidate interval set in step S44 being defined as parameters (step S45). Then, support apparatus 200 evaluates performance involved with inference of generated prediction model 140 (step S46). In step S46, a numerical value indicating performance is stored in association with the corresponding candidate interval.

Then, support apparatus 200 determines whether or not generation and evaluation of performance of prediction model 140 for all candidate intervals included in the search interval have been completed (step S47). When generation and evaluation of performance of prediction model 140 for all candidate intervals included in the search interval have not been completed (NO in step S47), support apparatus 200 sets another candidate interval included in the search interval (step S48) and repeats processing in step S45 or later.

When generation and evaluation of performance of prediction model 140 for all candidate intervals included in the search interval have been completed (YES in step S47), support apparatus 200 determines the candidate interval exhibiting highest evaluation of performance as the interval for prediction model 140 (step S49).

Support apparatus 200 thus performs as the function involved with generation of prediction model 140, processing for determining an interval to be used for prediction by successively varying the interval included in the search interval and evaluating accuracy of prediction with the determined explanatory variable. In the processing for determining the interval to be used for prediction, support apparatus 200 evaluates performance of the prediction models generated in patterns varied in at least one of the length and the position of the interval included in the search interval.

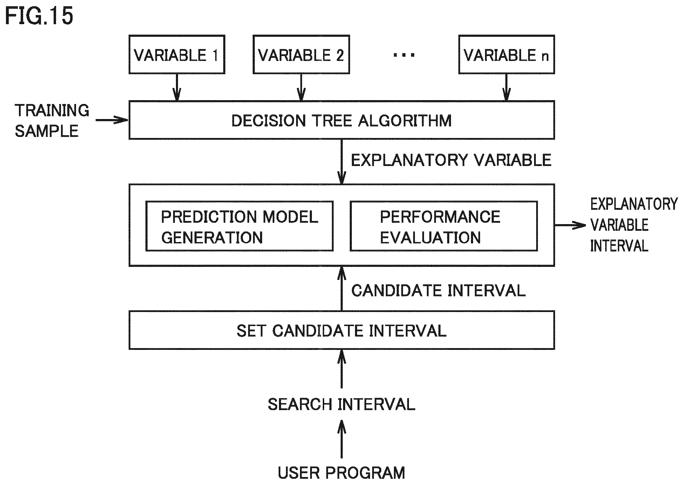

Fig. 15 is a schematic diagram for outlining processing contents in determination of an explanatory variable and an interval (step S4) in the processing procedure in the generation processing shown in Fig. 4. Referring to Fig. 15, the explanatory variable is determined by applying the decision tree algorithm to a plurality of variables 1, 2, ..., and n. A training sample is used for application of the decision tree algorithm.

The search interval is determined based on the user program, and one or more candidate intervals are set from the determined search interval. Prediction model 140 is then generated for each candidate interval, and performance of generated prediction model 140 is evaluated.

Finally, the explanatory variable and the interval corresponding to prediction model 140 high in performance are determined.

Thus, in step S4 shown in Fig. 4, support apparatus 200 determines the explanatory variable based on the importance calculated with the decision tree algorithm, and determines the explanatory variable and the interval by carrying out grid search (brute-force search) on the interval within the search interval with the use of the determined explanatory variable.

Though one or more explanatory variables are determined first in step S43 in the processing procedure in the generation processing shown in Fig. 14 described above, some candidates may also be set for the explanatory variable, and processing in step S44 or later may be performed for each candidate (each candidate including one or more explanatory variables).

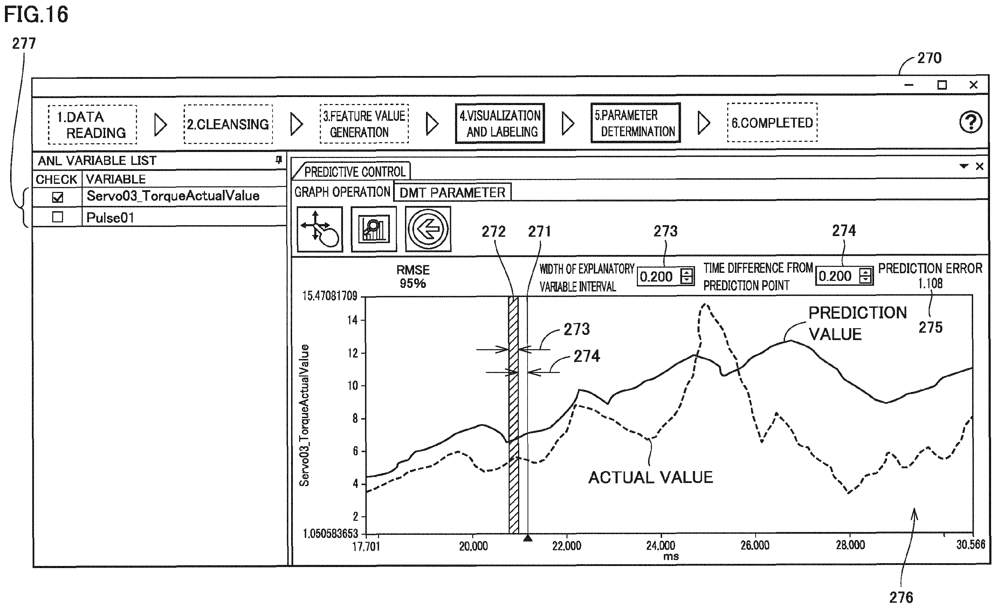

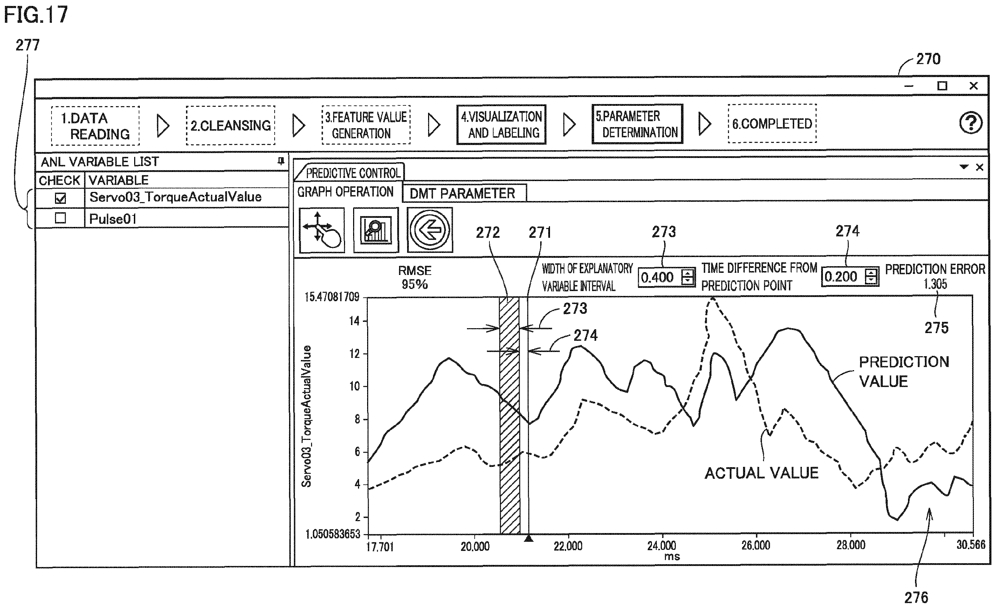

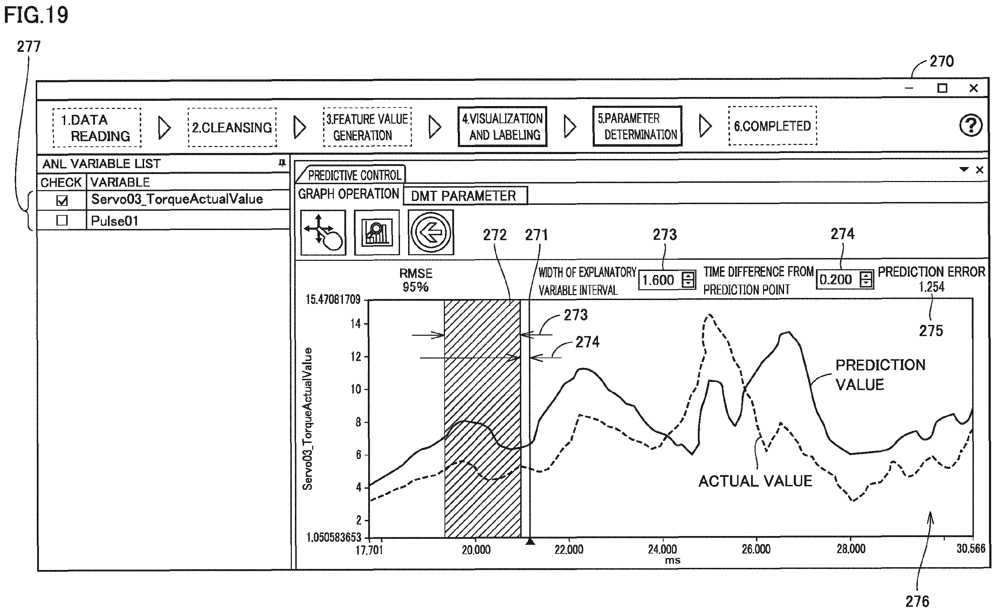

Figs. 16 to 19 are each a diagram showing an exemplary user interface provided in processing for determining an explanatory variable and an interval in prediction system 1 according to the embodiment.

Referring to Figs. 16 to 19, a user interface screen 270 includes a waveform display area 276 where an actual value and a prediction value are shown.

Waveforms (time-series data) of the actual value and the prediction value are shown in waveform display area 276. The actual value exhibits a waveform (time-series data) of any sample included in the training sample. The prediction value exhibits a waveform (time-series data) provided by generated prediction model 140.

A position and a duration of an interval 272 that delimits a range of the explanatory variable entered in prediction model 140 can freely be set for a predetermined prediction point 271. The user can freely change an interval width 273 of interval 272 and a time difference 274 from the prediction point by operating a mouse or the like to move the position of interval 272.

The waveform (time-series data) of the prediction value is calculated in accordance with interval 272 freely set by the user, and the calculated waveform (time-series data) of the prediction value is shown in waveform display area 276.

User interface screen 270 includes an explanatory variable list 277, and a checked variable of one or more variables is used as the explanatory variable.

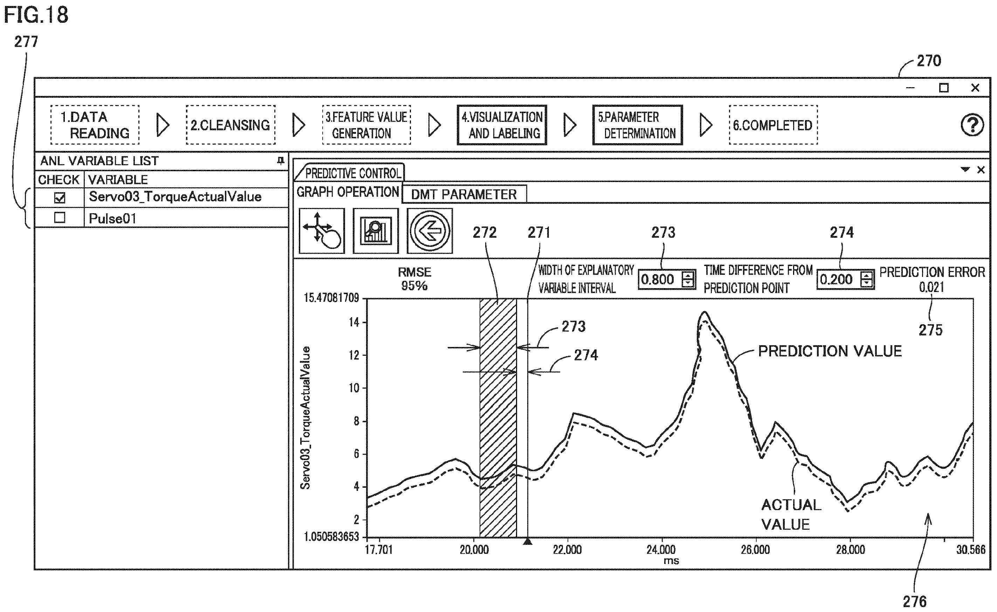

In user interface screen 270 shown in Figs. 16 to 19, it can be seen that setting of user interface screen 270 shown in Fig. 18 provides calculation of the prediction value highest in accuracy.

User interface screen 270 includes a prediction error 275 indicating deviation between the actual value and the prediction value.

In response to an operation onto user interface screen 270 by the user, support apparatus 200 may use prediction model 140 generated in the processing shown in Fig. 14 as it is to calculate the prediction value. Alternatively, support apparatus 200 may perform again the processing in step S43 or later or processing in step S44 or later in Fig. 15 in response to change as appropriate of the explanatory variable and/or the interval by the operation onto user interface screen 270 by the user. In other words, prediction model 140 may be generated again.

By generating again prediction model 140 in accordance with user interface screen 270 shown in Figs. 16 to 19, the user can determine the explanatory variable and/or the interval while the user searches for the explanatory variable and/or the interval to be set in prediction model 140.

Support apparatus 200 thus provides user interface screen 270 (see Figs. 16 to 19) where the operation by the user for changing the interval to be used for prediction is accepted.

Through processing as above, the explanatory variable and the interval to be used for the prediction model are determined.

### <H. Determining Model Parameter (Step S5)>

In step S5 shown in Fig. 4, support apparatus 200 determines the model parameter to be used for prediction model 140.

In step S4 described above, the explanatory variable and the interval are determined, with the prediction algorithm or the like adopted for prediction model 140 being fixed to the default value or the like. In step S5, based on the determined explanatory variable and interval as the premise, the model parameter of prediction model 140 is determined in consideration of operational indicators such as prediction accuracy, a model size, a processing speed, and the like.

Though prediction accuracy, the model size, and the processing speed are described as examples of a plurality of indicators in the description below, the indicator is not necessarily limited to these elements. The plurality of indicators preferably include at least one of prediction accuracy, the model size, and the processing speed.

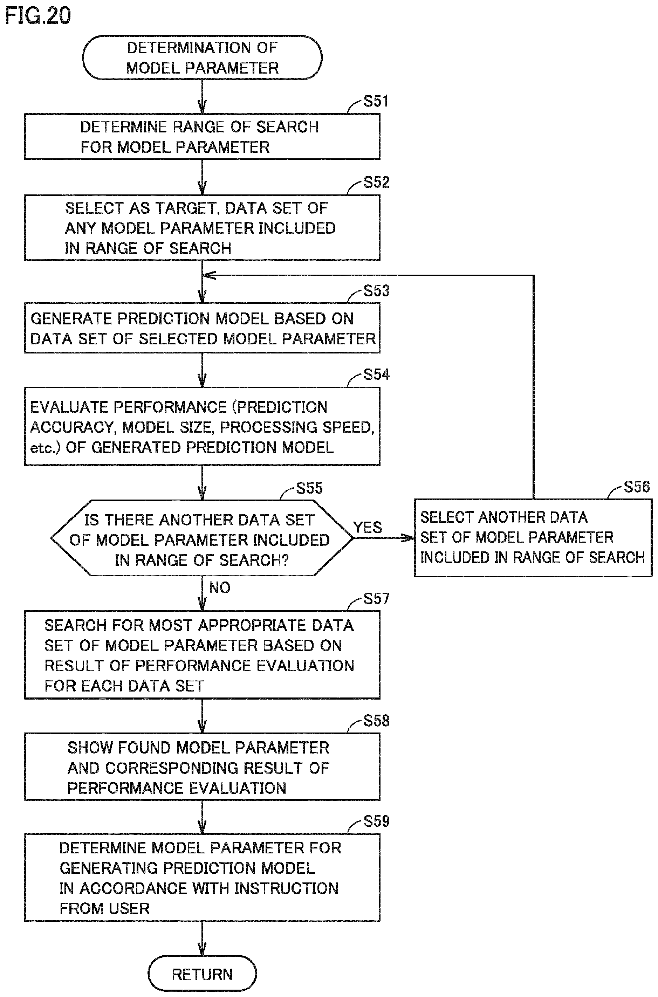

Fig. 20 is a flowchart showing a more detailed processing procedure involved with determination of a model parameter (step S5) shown in Fig. 4. Referring to Fig. 20, support apparatus 200 determines a range of search for a model parameter (step S51). The range of search for the model parameter delimits a range of search (upper and lower limits) for each parameter in addition to the type of the parameter to be searched for.

In succession, support apparatus 200 selects as a target, a data set of any model parameter included within the range of search determined in step S51 (step S52). Then, support apparatus 200 generates prediction model 140 based on the selected data set of the model parameter (step S53) and evaluates performance (prediction accuracy, the model size, the processing speed, and the like) of generated prediction model 140 (step S54).

Support apparatus 200 determines whether or not there is another data set of a model parameter included in the range of search determined in step S51 (step S55). When there is another data set of the model parameter included in the range of search determined in step S51 (YES in step S55), support apparatus 200 selects another data set of the model parameter included in the range of search determined in step S51 (step S56) and repeats processing in step S53 or later.

In contrast, when there is no another data set of the model parameter included in the range of search determined in step S51 (NO in step S55), support apparatus 200 searches for a most appropriate data set of a model parameter based on a result of evaluation of performance for each data set (step S57) and shows a found model parameter and a corresponding result of evaluation of performance (step S58).

Finally, support apparatus 200 determines a model parameter for generating prediction model 140 in accordance with an instruction from a user (step S59).

Support apparatus 200 thus performs as the function involved with generation of prediction model 140, processing for determining the model parameter for defining prediction model 140 by evaluating a plurality of indicators for prediction model 140 defined by each model parameter, with the model parameter defining prediction model 140 being successively varied, under a condition of the determined explanatory variable and the determined interval.

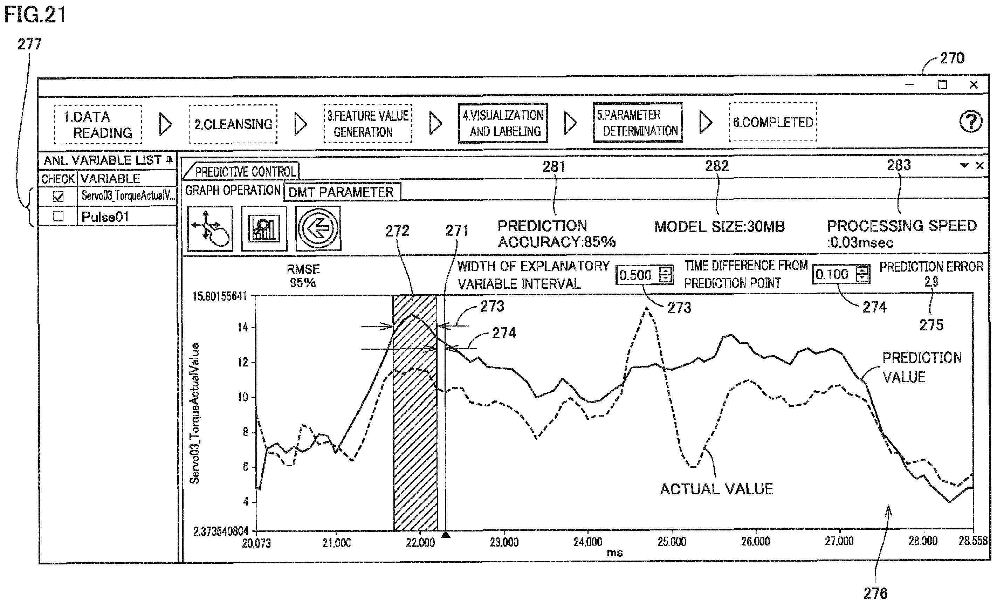

Fig. 21 is a diagram showing an exemplary user interface provided in processing for determining a model parameter in prediction system 1 according to the embodiment. In user interface screen 270 shown in Fig. 21, prediction accuracy 281, a model size 282, and a processing speed 283 that have been calculated are additionally shown, as compared with user interface screen 270 shown in Figs. 16 to 19.

Support apparatus 200 thus provides user interface screen 270 showing a plurality of indicators (see Fig. 21). The user can also adjust the explanatory variable and the interval while the user checks these indicators.

An optimal model parameter may be searched for in step S57 in Fig. 20 by setting a priority for such indicators as prediction accuracy, the model size, and the processing speed.

For example, it is assumed that the priority for the indicators is set in the order of prediction accuracy, the model size, and the processing speed. In addition, a minimum condition may be set for each indicator.

For example, setting as below may be made.
- Indicator with priority 1: prediction accuracy; condition: prediction accuracy ≥ 80%
- Indicator with priority 2: model size; condition: model size ≤ 50 MB
- Indicator with priority 3: processing speed; condition: processing speed ≤ 0.1 msec.

With such setting of each indicator, support apparatus 200 extracts a set of good model parameters for the indicator with priority 1, and then searches for a data set good in both of the indicator with priority 2 and the indicator with priority 3.

Any priority may be set for any indicator, and the same priority may be set for a plurality of indicators. Furthermore, without setting the priority, results of evaluation of indicators may be generalized to determine an optimal data set.

Thus, in determining a model parameter (step S5), a model parameter generally good in indicator (typically, high in accuracy, small in model size, and high in processing speed) can be determined by grid search (brute-force search).

Furthermore, the user can generate appropriate prediction model 140 by finely adjusting the model parameter, the explanatory variable, the interval, and the like as necessary while the user checks performance of the prediction model based on the determined model parameter on the user interface screen.

Such a user interface screen is provided, so that prediction model 140 can be determined by comprehensive evaluation inclusive of a plurality of indicators such as prediction accuracy, the model size, the processing speed, and the like.

### <I. Modification>

Though prediction system 1 that predicts change over time is described in the description above, the prediction system is applicable also to an abnormality sensing system that senses an abnormality that occurs in an object to be controlled or the like.

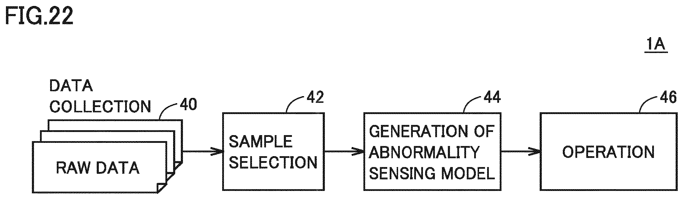

Fig. 22 is a schematic diagram showing an overall configuration of an abnormality sensing system 1A according to a modification of the present embodiment. Referring to Fig. 22, abnormality sensing system 1A selects a training sample from raw data 40 obtained from an object to be controlled (sample selection 42), and generates an abnormality sensing model 44 based on the selected training sample. Then, operation 46 of abnormality sensing is performed using generated abnormality sensing model 44.

Abnormality sensing model 44 aims to sense that the object to be controlled exhibits a state different from a normal state. With the use of raw data (time-series data) collected from the object to be controlled, abnormality sensing model 44 adapted to collected raw data is generated. Input of raw data different from an input in the normal state to abnormality sensing model 44 leads to output of a value indicating that a state is different from the normal state, so that occurrence of some kind of abnormality in the object to be controlled can be sensed.

For a training sample to be used for such abnormality sensing model 44, as in step S3 described above, raw data different in pattern of variation is preferably adopted.

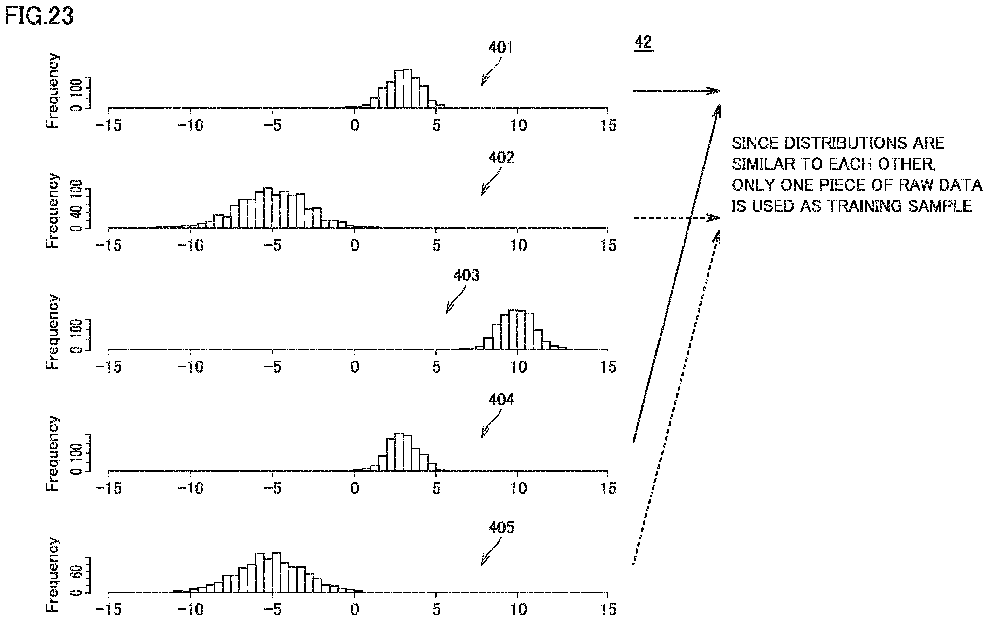

Fig. 23 is a diagram for illustrating exemplary processing for sample selection shown in Fig. 22. Referring to Fig. 23, in an example where five pieces of raw data 401 to 405 are collected, raw data 401 and raw data 404 are similar in distribution. Similarly, raw data 402 and raw data 405 are similar in distribution.

Only one piece of raw data of such pieces of raw data similar in distribution to each other is preferably employed as the training sample. Consequently, in the example shown in Fig. 23, three pieces of raw data which are any one of raw data 401 and raw data 404, any one of raw data 402 and raw data 405, and raw data 403 may be selected as the training samples.

By thus extracting samples different in pattern of variation from one another as in step S3 described above also for the training sample to be used for abnormality sensing model 44, sensing performance of abnormality sensing model 44 can be enhanced.

### <J. Additional Aspects>

The present embodiment as described above encompasses technical concepts as below.

### [Configuration 1]

A prediction system comprising:
a control operation unit (164) configured to perform operation for controlling an object to be controlled;
a prediction value obtaining unit (156) configured to obtain a prediction value by entering an actual value composed of one or more status values among status values that can be referred to by the control operation unit into a prediction model; and
a prediction model generator (200) configured to determine the prediction model in advance,
the prediction model generator comprising
   means (2261) configured to determine as an explanatory variable, one or more status values among a plurality of status values associated with a training sample to be used for generation of the prediction model, based on importance with respect to the training sample,
   means (2261) configured to determine an interval to be used for prediction by evaluating accuracy of prediction with the determined explanatory variable, with an interval included in a search interval being successively varied, and
   means (2262) configured to determine a model parameter for defining the prediction model by evaluating a plurality of indicators for the prediction model defined by each model parameter, with the model parameter defining the prediction model being successively varied, under a condition of the determined explanatory variable and the determined interval.

### [Configuration 2]

The prediction system described in configuration 1, wherein
the prediction model generator further comprises means (2261) configured to select a sample to be used as the training sample from among a plurality of samples by clustering using one or more feature values calculated from each sample.

### [Configuration 3]

The prediction system described in configuration 1 or 2, wherein
the prediction model generator is configured to calculate importance of each status value by applying a decision tree algorithm to the training sample and a plurality of associated status values.

### [Configuration 4]

The prediction system described in any one of configurations 1 to 3, wherein
the prediction model generator is configured to evaluate performance of prediction models generated in patterns different in at least one of a length and a position of an interval included in the search interval.

### [Configuration 5]

The prediction system described in configuration 4, wherein
the prediction model generator is configured to fix a model parameter of the prediction model and then search for an interval to be used for the prediction.

### [Configuration 6]

The prediction system described in configuration 4 or 5, wherein
the prediction model generator further comprises means configured to provide a first user interface (270) that accepts an operation by a user for changing an interval to be used for the prediction.

### [Configuration 7]

The prediction system described in any one of configurations 1 to 6, wherein
the plurality of indicators comprise at least one of prediction accuracy, a model size, and a processing speed.

### [Configuration 8]

The prediction system described in configuration 7, wherein
the prediction model generator further comprises means configured to provide a second user interface (270) that shows the plurality of indicators.

### [Configuration 9]

An information processing apparatus (200) connected to a control device (100), the control device comprising a control operation unit (164) configured to perform operation for controlling an object to be controlled and a prediction value obtaining unit (156) configured to obtain a prediction value by entering an actual value composed of one or more status values among status values that can be referred to by the control operation unit into a prediction model, the information processing apparatus comprising, as a prediction model generator configured to determine the prediction model in advance:
means (2261) configured to determine as an explanatory variable, one or more status values among a plurality of status values associated with a training sample to be used for generation of the prediction model, based on importance with respect to the training sample;
means (2261) configured to determine an interval to be used for prediction by evaluating accuracy of prediction with the determined explanatory variable, with an interval included in a search interval being successively varied; and
means (2262) configured to determine a model parameter for defining the prediction model by evaluating a plurality of indicators for the prediction model defined by each model parameter, with the model parameter defining the prediction model being successively varied, under a condition of the determined explanatory variable and the determined interval.

### [Configuration 10]

An information processing program (226) executed by a computer (200) connected to a control device (100), the control device comprising a control operation unit (164) configured to perform operation for controlling an object to be controlled and a prediction value obtaining unit (156) configured to obtain a prediction value by entering an actual value composed of one or more status values among status values that can be referred to by the control operation unit into a prediction model,
the information processing program causing the computer to perform, as processing for determining the prediction model in advance:
determining as an explanatory variable, one or more status values among a plurality of status values associated with a training sample to be used for generation of the prediction model, based on importance with respect to the training sample (S43);
determining an interval to be used for prediction by evaluating accuracy of prediction with the determined explanatory variable, with an interval included in a search interval being successively varied (S44); and
determining a model parameter for defining the prediction model by evaluating a plurality of indicators for the prediction model defined by each model parameter, with the model parameter defining the prediction model being successively varied, under a condition of the determined explanatory variable and the determined interval (S5; S51 to S59).

### <K. Advantage>

In the prediction system according to the present embodiment, the prediction model can finally be determined based on a plurality of indicators, and hence a prediction model suitable for actual operation can readily be generated.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 prediction system; 1A abnormality sensing system; 2, 4 field bus; 6 higher-order network; 10 field apparatus group; 12 remote I/O apparatus; 14 relay group; 16, 124 I/O unit; 18 image sensor; 20 camera; 22 servo driver; 24 servo motor; 30 pressing machine; 31 workpiece; 32 intermediate product; 33 base; 34 support base; 35 pressing plate; 36 driveshaft; 37 motor; 40, 401, 402, 403, 404, 405 raw data; 42 sample selection; 44 abnormality sensing model; 46 operation; 100 control device; 102, 202 processor; 104 chip set; 106, 206 main storage; 108, 208 secondary storage; 110, 214 higher-order network controller; 112, 212 USB controller; 114 memory card interface; 116 memory card; 118, 120 field bus controller; 122 internal bus controller; 132 storage area; 134 export module; 140 prediction model; 142 model parameter; 144 reference trajectory; 150 PLC engine; 154 user program; 156 prediction value obtaining code; 158 error evaluation code; 160 additional training code; 162 writing code; 164 control operation code; 200 support apparatus; 204 optical drive; 205 recording medium; 216 input device; 218 display device; 220 bus; 222 development program; 224 interface program; 226 analysis program; 230 user interface; 232 script engine; 234 setting file; 236 input and output management module; 238 screen display module; 240 graph library; 242 analysis module; 244 analysis library; 250, 260, 270 user interface screen; 252, 262 synthesized waveform; 254 sample group; 264 similarity; 271 prediction point; 272 interval; 273 interval width; 274 time difference; 275 prediction error; 276 waveform display area; 277 explanatory variable list; 281 prediction accuracy; 282 model size; 283 processing speed; 300 higher-order server; 400 display apparatus; 2261 interval determination module; 2262 model generation module; 2263 inference module; 2264 evaluation module

## Claims

1. A prediction system (1) comprising:
a control operation unit (164) configured to perform operation for controlling an object to be controlled;
a prediction value obtaining unit (156) configured to obtain a prediction value by entering an actual value composed of one or more status values among status values that can be referred to by the control operation unit into a prediction model; and
a prediction model generator (200) configured to determine the prediction model in advance,
the prediction model generator comprising
means (2261) configured to determine as an explanatory variable, one or more status values among a plurality of status values associated with a training sample to be used for generation of the prediction model, based on importance with respect to the training sample,
means (2261) configured to determine an interval to be used for prediction among candidate intervals by evaluating accuracy of prediction with the determined explanatory variable for each candidate interval, with the candidate interval being successively varied in a search interval that is set as an integral multiple of a control cycle of the operation for controlling, and
means (2262) configured to determine a model parameter for defining the prediction model by evaluating a plurality of indicators of a prediction model defined by each model parameter, with the model parameter being successively varied, under a condition of the determined explanatory variable and the determined interval to be used for prediction, and
wherein the plurality of indicators comprise at least one of prediction accuracy, a model size, and a processing speed.

2. The prediction system according to claim 1, wherein
the prediction model generator further comprises means (2261) configured to select a sample to be used as the training sample from among a plurality of samples by clustering using one or more feature values calculated from each sample.

3. The prediction system according to claim 1 or 2, wherein
the prediction model generator is configured to calculate importance of each status value by applying a decision tree algorithm to the training sample and a plurality of associated status values.

4. The prediction system according to any one of claims 1 to 3, wherein
the prediction model generator is configured to evaluate performance of prediction models generated in patterns different in at least one of a length and a position of an interval included in the search interval.

5. The prediction system according to claim 4, wherein
the prediction model generator is configured to fix a model parameter of the prediction model and then search for an interval to be used for the prediction.

6. The prediction system according to claim 4 or 5, wherein
the prediction model generator further comprises means configured to provide a first user interface (270) that accepts an operation by a user for changing an interval to be used for the prediction.

7. The prediction system according to any one of claims 1 to 6, wherein
the prediction model generator further comprises means configured to provide a second user interface (270) that shows the plurality of indicators.

8. An information processing apparatus (200) connected to a control device (100), the control device comprising a control operation unit (164) configured to perform operation for controlling an object to be controlled and a prediction value obtaining unit (156) configured to obtain a prediction value by entering an actual value composed of one or more status values among status values that can be referred to by the control operation unit into a prediction model, the information processing apparatus comprising, as a prediction model generator configured to determine the prediction model in advance:
means (2261) configured to determine as an explanatory variable, one or more status values among a plurality of status values associated with a training sample to be used for generation of the prediction model, based on importance with respect to the training sample;
means (2261) configured to determine an interval to be used for prediction among candidate intervals by evaluating accuracy of prediction with the determined explanatory variable for each candidate interval, with the candidate interval being successively varied in a search interval that is set as an integral multiple of a control cycle of the operation for controlling; and
means (2262) configured to determine a model parameter for defining the prediction model by evaluating a plurality of indicators of a prediction model defined by each model parameter, with the model parameter being successively varied, under a condition of the determined explanatory variable and the determined interval to be used for prediction,
wherein the plurality of indicators comprise at least one of prediction accuracy, a model size, and a processing speed.

9. An information processing program (226) executed by a computer (200) connected to a control device (100), the control device comprising a control operation unit (164) configured to perform operation for controlling an object to be controlled and a prediction value obtaining unit (156) configured to obtain a prediction value by entering an actual value composed of one or more status values among status values that can be referred to by the control operation unit into a prediction model,
the information processing program causing the computer to perform, as processing for determining the prediction model in advance:
determining as an explanatory variable, one or more status values among a plurality of status values associated with a training sample to be used for generation of the prediction model, based on importance with respect to the training sample (S43);
determining an interval to be used for prediction among candidate intervals by evaluating accuracy of prediction with the determined explanatory variable for each candidate interval, with the candidate interval being successively varied in a search interval that is set as an integral multiple of a control cycle of the operation for controlling (S44); and
determining a model parameter for defining the prediction model by evaluating a plurality of indicators of a prediction model defined by each model parameter, with the model parameter being successively varied, under a condition of the determined explanatory variable and the determined interval to be used for prediction (S5; S51 to S59),
wherein the plurality of indicators comprise at least one of prediction accuracy, a model size, and a processing speed.

## Patentansprüche

1. Vorhersagesystem (1), das Folgendes umfasst:
eine Steueroperationseinheit (164), die konfiguriert ist, um eine Operation zum Steuern eines zu steuernden Objekts durchzuführen;
eine Vorhersagewerterlangungseinheit (156), die konfiguriert ist, um durch Eingeben eines tatsächlichen Werts, der sich aus einem oder mehreren Statuswerten aus Statuswerten, auf welche die Steueroperationseinheit Bezug nehmen kann, zusammensetzt, in ein Vorhersagemodell einen Vorhersagewert zu erhalten; und
einen Vorhersagemodellgenerator (200), der konfiguriert ist, um das Vorhersagemodell vorab zu bestimmen,
wobei der Vorhersagemodellgenerator Folgendes umfasst:
ein Mittel (2261), das konfiguriert ist, um einen oder mehrere Statuswerte aus einer Vielzahl von Statuswerten, die einem zur Erzeugung des Vorhersagemodells zu verwendenden Trainingsbeispiel zugeordnet sind, beruhend auf einer Wichtigkeit in Bezug auf das Trainingsbeispiel als eine erklärende Variable zu bestimmen,
ein Mittel (2261), das konfiguriert ist, um aus Kandidatenintervallen ein Intervall zu bestimmen, das zur Vorhersage zu verwenden ist, und zwar durch Bewerten der Vorhersagegenauigkeit mit der bestimmten erklärenden Variable für jedes Kandidatenintervall, wobei das Kandidatenintervall anschließend in einem Suchintervall variiert wird, das als ein ganzzahliges Vielfaches eines Steuerzyklus der Steueroperation eingestellt ist, und
ein Mittel (2262), das konfiguriert ist, um einen Modellparameter für das Definieren des Vorhersagemodells durch Bewerten einer Vielzahl von Indikatoren eines durch jeden Modellparameter definierten Vorhersagemodells zu bestimmen, wobei der Modellparameter anschließend variiert wird, unter einer Bedingung der bestimmten erklärenden Variable und des bestimmten, zur Vorhersage zu verwendenden Intervalls und
wobei die Vielzahl von Indikatoren zumindest eines aus einer Vorhersagegenauigkeit, einer Modellgröße und einer Verarbeitungsgeschwindigkeit umfasst.

2. Vorhersagesystem nach Anspruch 1, wobei
der Vorhersagemodellgenerator ferner ein Mittel (2261) umfasst, das konfiguriert ist, um aus einer Vielzahl von Beispielen ein als Trainingsbeispiel zu verwendendes Beispiel durch Clustern unter Verwendung von einem oder mehreren aus jedem Beispiel berechneten Merkmalwerten auszuwählen.

3. Vorhersagesystem nach Anspruch 1 oder 2, wobei
der Vorhersagemodellgenerator konfiguriert ist, um die Wichtigkeit jedes Statuswerts durch Anwenden eines Entscheidungsbaum-Algorithmus auf das Trainingsbeispiel und eine Vielzahl von zugeordneten Statuswerten zu berechnen.

4. Vorhersagemodell nach einem der Ansprüche 1 bis 3, wobei
der Vorhersagemodellgenerator konfiguriert ist, um die Leistungsfähigkeit von Vorhersagemodellen zu bewerten, die in Mustern erzeugt wurden, welche sich hinsichtlich zumindest eines aus einer Länge und einer Position eines in dem Suchintervall enthaltenen Intervalls unterscheiden.

5. Vorhersagesystem nach Anspruch 4, wobei
der Vorhersagemodellgenerator konfiguriert ist, um einen Modellparameter des Vorhersagemodells festzulegen und anschließend nach einem für die Vorhersage zu verwendenden Intervall zu suchen.

6. Vorhersagesystem nach Anspruch 4 oder 5, wobei
der Vorhersagemodellgenerator ferner ein Mittel umfasst, das konfiguriert ist, um eine erste Benutzeroberfläche (270) bereitzustellen, welche eine Operation durch einen Benutzer zum Ändern eines zur Vorhersage zu verwendenden Intervalls annimmt.

7. Vorhersagesystem nach einem der Ansprüche 1 bis 6, wobei
der Vorhersagemodellgenerator ferner ein Mittel umfasst, das konfiguriert ist, um eine zweite Benutzeroberfläche (270) bereitzustellen, welche die Vielzahl von Indikatoren zeigt.

8. Informationsverarbeitungsvorrichtung (200), die mit einer Steuervorrichtung (100) verbunden ist, wobei die Steuervorrichtung eine Steueroperationseinheit (164) umfasst, die konfiguriert ist, um ein zu steuerndes Objekt und eine Vorhersagewerterlangungseinheit (156) zu steuern, die konfiguriert ist, um durch Eingeben eines tatsächlichen Werts, der sich aus einem oder mehreren Statuswerten aus Statuswerten, auf welche die Steueroperationseinheit Bezug nehmen kann, zusammensetzt, in ein Vorhersagemodell einen Vorhersagewert zu erhalten, wobei die Informationsverarbeitungsvorrichtung als Vorhersagemodellgenerator, der konfiguriert ist, um das Vorhersagemodell im Voraus zu bestimmen, Folgendes umfasst:
ein Mittel (2261), das konfiguriert ist, um einen oder mehrere Statuswerte aus einer Vielzahl von Statuswerten, die einem zur Erzeugung des Vorhersagemodells zu verwendenden Trainingsbeispiel zugeordnet sind, beruhend auf einer Wichtigkeit in Bezug auf das Trainingsbeispiel als eine erklärende Variable zu bestimmen,
ein Mittel (2261), das konfiguriert ist, um aus Kandidatenintervallen ein Intervall zu bestimmen, das zur Vorhersage zu verwenden ist, und zwar durch Bewerten der Vorhersagegenauigkeit mit der bestimmten erklärenden Variable für jedes Kandidatenintervall, wobei das Kandidatenintervall in einem Suchintervall sukzessive variiert wird, das als ein ganzzahliges Vielfaches eines Steuerzyklus der Steueroperation eingestellt ist, und
ein Mittel (2262), das konfiguriert ist, um einen Modellparameter für das Definieren des Vorhersagemodells durch Bewerten einer Vielzahl von Indikatoren eines durch jeden Modellparameter definierten Vorhersagemodells zu bestimmen, wobei der Modellparameter sukzessive variiert wird, unter einer Bedingung der bestimmten erklärenden Variable und des bestimmten, zur Vorhersage zu verwendenden Intervalls und
wobei die Vielzahl von Indikatoren zumindest eines aus einer Vorhersagegenauigkeit, einer Modellgröße und einer Verarbeitungsgeschwindigkeit umfasst.

9. Informationsverarbeitungsprogramm (226), das durch einen mit einer Steuervorrichtung (100) verbundenen Computer (200) ausgeführt wird, wobei die Steuervorrichtung Folgendes umfasst: eine Steueroperationseinheit (164), die konfiguriert ist, um eine Operation zum Steuern eines zu steuernden Objekts durchzuführen, und eine Vorhersagewerterlangungseinheit (156), die konfiguriert ist, um durch Eingeben eines tatsächlichen Werts, der sich aus einem oder mehreren Statuswerten aus Statuswerten, auf welche die Steueroperationseinheit Bezug nehmen kann, zusammensetzt, in ein Vorhersagemodell einen Vorhersagewert zu erhalten,
wobei das Informationsverarbeitungsprogramm bewirkt, dass der Computer als Verarbeitung für das Vorabbestimmen des Vorhersagemodells, Folgendes durchführt:
Bestimmen von einem oder mehreren Statuswerten aus einer Vielzahl von Statuswerten, die einem zur Erzeugung des Vorhersagemodells zu verwendenden Trainingsbeispiel zugeordnet sind, als eine erklärende Variable beruhend auf einer Wichtigkeit in Bezug auf das Trainingsbeispiel (S43);
Bestimmen eines Intervalls, das zur Vorhersage zu verwenden ist, aus Kandidatenintervallen, durch Bewerten der Vorhersagegenauigkeit mit der bestimmten erklärenden Variable für jedes Kandidatenintervall, wobei das Kandidatenintervall anschließend in einem Suchintervall variiert wird, das als ganzzahliges Vielfaches eines Steuerzyklus der Steueroperation eingestellt wird, (S44) und
Bestimmen eines Modellparameters für das Definieren des Vorhersagemodells durch Bewerten einer Vielzahl von Indikatoren eines durch jeden Modellparameter definierten Vorhersagemodells, wobei der Modellparameter anschließend variiert wird, unter einer Bedingung der bestimmten erklärenden Variable und des bestimmten, zur Vorhersage zu verwendenden Intervalls (S5, S51 bis S59) und
wobei die Vielzahl von Indikatoren zumindest eines aus einer Vorhersagegenauigkeit, einer Modellgröße und einer Verarbeitungsgeschwindigkeit umfasst.

## Revendications

1. Système de prédiction (1), comprenant :
une unité d'opération de commande (164) configurée pour effectuer une opération afin de commander un objet à commander ;
une unité d'obtention de valeur de prédiction (156) configurée pour obtenir une valeur de prédiction en entrant une valeur réelle constituée d'une ou plusieurs valeurs d'état parmi des valeurs d'état qui peuvent être référencées par l'unité d'opération de commande dans un modèle de prédiction ; et
un générateur de modèle de prédiction (200) configuré pour déterminer le modèle de prédiction à l'avance,
le générateur de modèle de prédiction comprenant
des moyens (2261) configurés pour déterminer en tant que variable explicative une ou plusieurs valeurs d'état parmi une pluralité de valeurs d'état associées à un échantillon d'entraînement à utiliser pour la génération du modèle de prédiction, sur la base de l'importance par rapport à l'échantillon d'entraînement,
des moyens (2261) configurés pour déterminer un intervalle à utiliser pour la prédiction parmi des intervalles candidats en évaluant la précision de la prédiction avec la variable explicative déterminée pour chaque intervalle candidat, l'intervalle candidat étant modifié successivement dans un intervalle de recherche qui est défini comme un multiple entier d'un cycle de commande de l'opération de commande, et
des moyens (2262) configurés pour déterminer un paramètre de modèle afin de définir le modèle de prédiction en évaluant une pluralité d'indicateurs d'un modèle de prédiction défini par chaque paramètre de modèle, le paramètre de modèle étant modifié successivement, sous une condition de la variable explicative déterminée et de l'intervalle déterminé à utiliser pour la prédiction, et
dans lequel la pluralité d'indicateurs comprennent au moins une parmi une précision de prédiction, une taille de modèle et une vitesse de traitement.

2. Système de prédiction selon la revendication 1, dans lequel
le générateur de modèle de prédiction comprend en outre des moyens (2261) configurés pour sélectionner un échantillon à utiliser comme échantillon d'entraînement parmi une pluralité d'échantillons par regroupement en utilisant une ou plusieurs valeurs de caractéristique calculées à partir de chaque échantillon.

3. Système de prédiction selon la revendication 1 ou 2, dans lequel
le générateur de modèle de prédiction est configuré pour calculer l'importance de chaque valeur d'état en appliquant un algorithme d'arbre de décision à l'échantillon d'entraînement et une pluralité de valeurs d'état associées.

4. Système de prédiction selon l'une quelconque des revendications 1 à 3, dans lequel
le générateur de modèle de prédiction est configuré pour évaluer la performance des modèles de prédiction générés dans des motifs différents dans au moins une parmi une longueur et une position d'un intervalle inclus dans l'intervalle de recherche.

5. Système de prédiction selon la revendication 4, dans lequel
le générateur de modèle de prédiction est configuré pour fixer un paramètre de modèle du modèle de prédiction, puis rechercher un intervalle à utiliser pour la prédiction.

6. Système de prédiction selon la revendication 4 ou 5, dans lequel
le générateur de modèle de prédiction comprend en outre des moyens configurés pour fournir une première interface utilisateur (270) qui accepte une opération par un utilisateur pour changer un intervalle à utiliser pour la prédiction.

7. Système de prédiction selon l'une quelconque des revendications 1 à 6, dans lequel
le générateur de modèle de prédiction comprend en outre des moyens configurés pour fournir une seconde interface utilisateur (270) qui montre la pluralité d'indicateurs.

8. Appareil de traitement d'informations (200) connecté à un dispositif de commande (100), le dispositif de commande comprenant une unité d'opération de commande (164) configurée pour effectuer une opération afin de commander un objet à commander et une unité d'obtention de valeur de prédiction (156) configurée pour obtenir une valeur de prédiction en entrant une valeur réelle constituée d'une ou plusieurs valeurs d'état parmi des valeurs d'état qui peuvent être référencées par l'unité d'opération de commande dans un modèle de prédiction, l'appareil de traitement d'informations comprenant, en tant que générateur de modèle de prédiction configuré pour déterminer le modèle de prédiction à l'avance :
des moyens (2261) configurés pour déterminer en tant que variable explicative une ou plusieurs valeurs d'état parmi une pluralité de valeurs d'état associées à un échantillon d'entraînement à utiliser pour la génération du modèle de prédiction, sur la base de l'importance par rapport à l'échantillon d'entraînement ;
des moyens (2261) configurés pour déterminer un intervalle à utiliser pour une prédiction parmi des intervalles candidats en évaluant la précision de la prédiction avec la variable explicative déterminée pour chaque intervalle candidat, l'intervalle candidat étant modifié successivement dans un intervalle de recherche qui est défini comme un multiple entier d'un cycle de commande de l'opération de commande ; et
des moyens (2262) configurés pour déterminer un paramètre de modèle pour définir le modèle de prédiction en évaluant une pluralité d'indicateurs d'un modèle de prédiction défini par chaque paramètre de modèle, le paramètre de modèle étant modifié successivement, sous une condition de la variable explicative déterminée et de l'intervalle déterminé à utiliser pour la prédiction,
dans lequel la pluralité d'indicateurs comprennent au moins une parmi une précision de prédiction, une taille de modèle et une vitesse de traitement.

9. Programme de traitement d'informations (226) exécuté par un ordinateur (200) connecté à un dispositif de commande (100), le dispositif de commande comprenant une unité d'opération de commande (164) configurée pour effectuer une opération afin de commander un objet à commander et une unité d'obtention de valeur de prédiction (156) configurée pour obtenir une valeur de prédiction en entrant une valeur réelle constituée d'une ou plusieurs valeurs d'état parmi des valeurs d'état qui peuvent être référencées par l'unité d'opération de commande dans un modèle de prédiction,
le programme de traitement d'informations amenant l'ordinateur à exécuter, en tant que traitement pour déterminer le modèle de prédiction à l'avance, les étapes consistant à :
déterminer en tant que variable explicative une ou plusieurs valeurs d'état parmi une pluralité de valeurs d'état associées à un échantillon d'entraînement à utiliser pour la génération du modèle de prédiction, sur la base de l'importance par rapport à l'échantillon d'entraînement (S43) ;
déterminer un intervalle à utiliser pour une prédiction parmi des intervalles candidats en évaluant la précision de la prédiction avec la variable explicative déterminée pour chaque intervalle candidat, l'intervalle candidat étant modifié successivement dans un intervalle de recherche qui est défini comme un multiple entier d'un cycle de commande de l'opération de commande (S44) ; et
déterminer un paramètre de modèle pour définir le modèle de prédiction en évaluant une pluralité d'indicateurs d'un modèle de prédiction défini par chaque paramètre de modèle, le paramètre de modèle étant modifié successivement, sous une condition de la variable explicative déterminée et de l'intervalle déterminé à utiliser pour la prédiction (S5 ; S51 à S59),
dans lequel la pluralité d'indicateurs comprennent au moins une parmi une précision de prédiction, une taille de modèle et une vitesse de traitement.
